# EUROPÄISCHE PATENTSCHRIFT

(11) **EP 3 352 557 B1**
(45) Veröffentlichungstag und Bekanntmachung des Hinweises auf die Patenterteilung: **13.03.2019**
(21) Anmeldenummer: 17816828.2
(22) Anmeldetag: 15.12.2017
(51) Int. Cl.: A01C 7/08

(54) **VERFAHREN UND VORRICHTUNG ZUR VERTEILUNG KÖRNIGEN GUTS AUF EINE VERÄNDERLICHE ANZAHL VON LEITUNGEN**
METHOD AND DEVICE FOR THE DISTRIBUTION OF GRANULAR MATERIAL INTO A VARIABLE NUMBER OF CONDUITS
PROCÉDÉ ET DISPOSITIF POUR LA DISTRIBUTION DE MATÉRIEL GRANULAIRE À UN NOMBRE VARIABLE DES CONDUITS

(30) Priorität: 16.12.2016 DE 102016015033
(43) Veröffentlichungstag der Anmeldung: 01.08.2018
(73) Patentinhaber: Funck, Gerald, 74193 Schwaigern-Stetten (DE)
(72) Erfinder: Funck, Gerald, 74193 Schwaigern-Stetten (DE)
(74) Vertreter: Dennemeyer & Associates S.A.
(86) Internationale Anmeldenummer: PCT/EP2017/083104
(87) Internationale Veröffentlichungsnummer: WO 2018/109189

(56) Entgegenhaltungen:
- EP-A1- 2 695 508
- DE-A1- 2 603 088
- US-A- 2 923 574

## Beschreibung

### Gebiet der Erfindung

Die vorliegende Erfindung betrifft ein Verfahren zur Verteilung körnigen Guts auf eine veränderliche Anzahl von beispielsweise zu jeweils mindestens einem Ausbringungsorgan führenden Leitungen, insbesondere Saatleitungen, gemäß dem Oberbegriff des Anspruchs 1, sowie eine Vorrichtung zur Verteilung körnigen Guts auf eine veränderliche Anzahl von zu jeweils mindestens einem Ausbringungsorgan führenden Leitungen, insbesondere Saatleitungen, gemäß dem Oberbegriff des Anspruchs 9.

Eine effektive Ressourcenschonung wird in der Landwirtschaft durch eine möglichst exakte Dosierung und ortsgenaue Zuordnung auf oder in den Boden während der Ausbringung erhalten. Dies trifft sowohl für flüssig, als auch für fest ausgebrachte Stoffe zu. Beispielsweise kann hierdurch bei der Ausbringung von Saatgut eine optimale Standraumzuteilung der einzelnen Pflanzen, einhergehend mit einem geringen Saatgutverbrauch erzielt werden.

Beispielsweise bei der auch als Drillsaat bezeichneten Reihensaat, ebenso wie bei der Mulch- und der Direktsaat ist es hierzu erforderlich, Samenkörner zu gleichen Anteilen und in gleichbleibender Menge mehreren parallel verlaufenden Särinnen oder -streifen zuzuführen. Die gleichbleibende Menge bezieht sich hierbei auf einen im Wesentlichen gleichbleibenden Quotienten von den einzelnen Särinnen zugeführten und darin abgelegten Samenkörnern über der Zeit.

Von Feldspritzen mit einer Vielzahl an quer zur Fahrtrichtung einer landwirtschaftlichen Maschine auskragenden Auslegern angeordneten Einzeldüsen ist bekannt, einzelne oder Gruppen von Düsen individuell bedarfsweise zu- und abzuschalten, beispielsweise wenn diese über einen bereits behandelten Bodenabschnitt ragen, oder der momentan unter diesen befindliche Bodenabschnitt keine Behandlung erfahren soll.

Für die Verteilung von im Wesentlichen Körner umfassenden körnigen Guts, beispielsweise Saatgut, auf mehrere Ausbringungsorgane oder -einrichtungen, wie etwa Säscharen, ist ebenso eine bedarfsweise Zu- und Abschaltung einzelner Ausbringungsorgane erwünscht, beispielsweise um Fahrgassen freizuhalten oder um bei Überschneidungen mit Bodenabschnitten, in denen bereits beispielsweise eine Saatgutablage erfolgt ist, eine unwirtschaftliche doppelte Kornablage zu vermeiden.

Zur Verteilung körnigen Guts auf mehrere Ausbringungsorgane oder -einrichtungen, wie beispielsweise Säscharen ist bekannt, aus einem einen Vorrat beherbergenden Reservoir Körner umfassendes körniges Gut beispielsweise mittels eines Zellenrads und/oder einer VenturiDüse einem Luftstrom zuzudosieren. Der so erhaltene Mischstrom aus dem als Trägermedium dienenden Luftstrom und dem zudosierten körnigen Gut wird anschließend einem Verteiler zugeführt. Von dem Verteiler gehen mehrere Verteilerleitungen ab. Jede dieser Verteilerleitungen mündet an einem von mehreren beispielsweise an quer zur Fahrtrichtung einer landwirtschaftlichen Maschine auskragenden Auslegern angeordneten Ausbringungsorganen, beispielsweise Säscharen.

### Stand der Technik

Durch DE 44 11 240 C2 ist bekannt, schwenkbare Klappen oder vertikal bewegliche Schieber in einem Verteiler vorzusehen, um einzelne, vom Verteiler abgehende Verteilerleitungen abzusperren. Mit der Absperrung wird sowohl der als Trägermedium dienende Luft-, als auch der Körnerstrom am Durchströmen der betroffenen Leitung gehindert.

Nachteilig hieran ist, dass wenn zu viele vom Verteiler abgehende Verteilerleitungen abgesperrt werden, der als Trägermedium dienende Luftstrom durch die Aufstauung im Verteiler zusammenbricht und seiner Transportaufgabe nicht mehr gerecht werden kann.

Nachteilig hieran ist darüber hinaus, dass es im Zulauf zur abgesperrten Verteilerleitung zu einem Stau kommen kann, wodurch die verstellbaren Klappen oder Schieber blockiert werden können.

Ein zusätzlicher Nachteil ist, dass sich durch die Absperrung im Verteiler die Konzentration des in die offen verbleibenden Verteilerleitungen abgegebenen körnigen Guts verändert.

Durch DE 102 10 010 A1 ist bekannt, eine Absperrung in oder am Ende oder am Anfang der von einem Verteiler abgehenden Verteilerleitungen, oder im Verteiler vorzusehen. Eine Absperrung im Verteiler sieht vor, gleichzeitig mehrere von einem Verteiler abgehende Verteilerleitungen abzusperren, indem ein Schieber in Richtung parallel zur Einströmrichtung des Mischstroms aus dem als Trägermedium dienenden Luftstrom und dem zudosierten körnigen Gut in einen vom Verteiler beherbergten Verteilerraum eingeschoben wird. Dieser Schieber ist mit radialem Abstand zu den vom Verteilerraum abgehenden Anschlüssen der Verteilerleitungen angeordnet. Der Verteiler weist hierzu an den Anschlüssen der Verteilerleitungen zum Verteilerraum einen größeren Innendurchmesser auf, als an in einem Eintrittsquerschnitt des Mischstroms in den Verteilerraum, wobei um den Schieber herum ein Ringraum verbleibt, von dem aus die Anschlüsse der Verteilerleitungen radial zur Einströmrichtung des Mischstroms gesehen nach außen abgehen. Der Schieber weist die Form eines zum Ringraum konzentrischen Zylinders auf.

Nachteilig hieran ist, dass abzusperrende Leitungen durch den Schieber lediglich von der Strömung abgeschattet werden, wodurch - in zwar verringertem Umfang - weiterhin Körner durch die vermeintlich abgesperrten Verteilerleitungen abgegeben werden.

Durch DE 196 13 785 C2 ist eine pneumatisch arbeitende Verteilmaschine zur Ausbringung körnigen Guts bekannt, bei der Sperrmittel vorgesehen sind, um die Abgabe körnigen Guts an einzelne oder Gruppen von an vom Verteiler abgehende Verteilerleitungen angeschlossene Ausbringungsorgane bedarfsweise zu unterbinden. Körniges Gut, das einer abgesperrten Verteilerleitung zugeführt wird, wird über einen Ableitstutzen abgeführt. Der Ableitstutzen ist mit einer Rückführungsleitung verbunden, die das körnige Gut wieder dem Reservoir zuführt oder dem Mischstrom wieder beimengt. In den einzelnen vom Verteiler abgehenden Verteilerleitungen ist jeweils eine Sperrmittel umfassende Weiche angeordnet, welche den Mischstrom aus dem als Trägermedium dienenden Luftstrom und dem zudosierten körnigen Gut entweder einer zu dem angeschlossenen Ausbringungsorgan führenden Leitung zuführt, oder in die Rückführungsleitung lenkt. Die Rückführungsleitung und die zum angeschlossenen Ausbringungsorgan führende Leitung sind nach der Weiche durch eine Abluftleitung miteinander verbunden, durch welche der als Trägermedium dienenden Luftstrom durch die zum angeschlossenen Ausbringungsorgan führende Leitung entweicht. Die Körner hingegen fallen durch die Schwerkraft in das Reservoir.

Nachteilig hieran ist, dass zur Rückführung ausschließlich auf die Schwerkraft vertraut werden muss. Da beispielsweise auszubringendes Saatgut auch mit Schmutz und Beize behaftet sein kann, kann es vorkommen, dass das Saatgut, sobald der Luftstrom weg ist, verklebt und dadurch die Rückführungsleitung verstopft. Darüber hinaus lässt die Schwerkraftförderung nur eine Anordnung des Reservoirs in Bezug auf den Verteiler zu, nämlich unterhalb desselben. Dies stellt eine erhebliche Einschränkung für die Auslegung von Sämaschinen dar.

Eine ähnliche Anordnung ist durch DE 10 2015 116 378 A1 bekannt, mit dem Unterschied, dass ein Steigrohr von unten nach oben in den Verteiler führt, durch welches ein Mischstrom aus Körner umfassendem körnigen Gut und einem als Trägermedium dienenden Luftstrom von unten in den Verteiler eintritt. Die Rückführungsleitungen münden in das Steigrohr. Nachteilig hieran ist die strömungstechnisch komplizierte Ausgestaltung. Die Rückführungsleitungen müssen in einem Querschnitt in das Steigrohr münden, in dem ein geringerer statischer Druck herrscht, als in den zu den Ausbringungsorganen führenden Leitungen, um ein Abkürzen zumindest des Luftstroms des Mischstroms aus der Steigleitung via der Rückführungsleitungen in die absperrbaren Verteilerleitungen zu verhindern. Dies gestaltet sich wegen der Strömungsverluste im Verteiler und den Weichen sowie aufgrund der in den Verteilerleitungen zum Transport der Körner zu den Ausbringungsorganen erforderlichen hohen Strömungsgeschwindigkeiten als äußerst schwierig, wenn nicht gar unmöglich. Hierdurch besteht ein erhebliches Ausfallrisiko durch verblocken beziehungsweise verstopfen des Verteilers.

Durch DE 10 2009 031 066 A1 ist ein Verteiler mit mehreren von diesem abgehenden Verteilerleitungen bekannt. Die Verteilerleitungen sind auf halber Höhe gleichmäßig über den Umfang verteilt an einen an seinen gegenüberliegenden Stirnseiten offenen, hohlzylinderförmigen Außenring angeschlossen. Der Außenring ist konzentrisch zu einem hohlzylinderförmigen Verteilergehäuse mit einer Eintrittsöffnung entlang dessen Hohlzylinderachse verschiebbar angeordnet. In einer die gegenüberliegenden Stirnseiten des Verteilergehäuses miteinander verbindenden Gehäusewandung sind in zwei entlang der Hohlzylinderachse versetzten, normal zur Hohlzylinderachse und parallel zueinander liegenden Abgabequerschnitten über den Umfang verteilt Abgabefenster in Übereinstimmung mit den Umfangspositionen der Verteilerleitungen am Außenring angeordnet. In einem ersten Abgabequerschnitt sind dabei eine der Anzahl der Verteilerleitungen entsprechende Zahl von Abgabefenstern angeordnet. In einem zweiten Abgabequerschnitt ist eine geringere Zahl von Abgabefenstern angeordnet. Durch eine Verschiebung des Außenrings entlang der Hohlzylinderachse werden entweder die Abgabefenster des ersten Abgabequerschnitts in Übereinstimmung mit den an den Außenring angeschlossenen Verteilerleitungen gebracht, wobei jeder Verteilerleitung ein Abgabefenster zugeordnet ist und damit eine Abgabe an alle Verteilerleitungen stattfindet, oder die Abgabefenster des zweiten Abgabequerschnitts in Übereinstimmung mit nur einem Teil den an den Außenring angeschlossenen Verteilerleitungen gebracht, wobei nicht jeder Verteilerleitung ein Abgabefenster zugeordnet wird und somit eine Abgabe nur an diejenigen Verteilerleitungen erfolgt, welchen im zweiten Abgabequerschnitt ein Abgabefenster zugeordnet ist.

Nachteilig hieran ist, dass mit der Absperrung einer Verteilerleitung sowohl der Körnerstrom als auch der Luftstrom abgesperrt wird, einhergehend mit den bereits voranstehend beschriebenen Nachteilen eines Verlusts der Transportfähigkeit des Luftstroms.

Dem Stand der Technik gemein ist ein mangelnder gezielter Umgang mit abgesperrten Verteilerleitungen zugedachtem körnigen Gut sowie die Überlassung desselben der Schwerkraft. Damit sind die möglichen konstruktiven Ausgestaltungen von nach dem Stand der Technik ausgelegten Sämaschinen sehr beschränkt.

EP 2 695 508 A1 offenbart ein Verfahren und eine Vorrichtung zur Verteilung Körner umfassenden körnigen Guts auf eine veränderliche Anzahl von Leitungen mit einer Rückführung momentan abgesperrten Leitungen zugedachter Körner gemäß den Oberbegriffen der Ansprüche 1 und 9.

US 2 923 574 A offenbart eine Vorrichtung zur Verteilung Körner umfassenden körnigen Guts, wobei ein konischer, sich nach oben erweiternder Heberotor das körnige Gut auf eine Abgabeebene hebt und auf eine Anzahl nicht absperrbarer Leitungen verteilt.

### Aufgabe

Eine Aufgabe der Erfindung ist die Angabe eines die Nachteile des Standes der Technik ausräumenden Verfahrens zur Verteilung von im Wesentlichen Körner umfassenden körnigen Guts auf eine veränderliche Anzahl von beispielsweise zu jeweils mindestens einem Ausbringungsorgan führenden Leitungen, insbesondere Saatleitungen, sowie die Bereitstellung einer zur Durchführung eines solchen Verfahrens geeigneten Vorrichtung zur Verteilung von im Wesentlichen Körner umfassenden körnigen Guts auf eine veränderliche Zahl von beispielsweise zu jeweils mindestens einem Ausbringungsorgan führenden Leitungen, insbesondere Saatleitungen anzugeben, welche eine breite konstruktive Ausgestaltung von Sämaschinen erlauben. Vorzugsweise ermöglichen sie darüber hinaus eine zuverlässige Ausbringung von Saatgut unabhängig von der als unterschiedliche Betriebszustände bezeichenbaren Anzahl abgesperrter Leitungen.

### Lösung

Die obige Aufgabe wird jeweils gelöst durch die Merkmale der unabhängigen Ansprüche. Weitere vorteilhafte Ausgestaltungen werden durch die Unteransprüche beschrieben.

Es ist ersichtlich, dass die Erfindung verwirklicht sein kann, indem zumindest derjenige Teil eines kurz als Körnerstrom bezeichneten Stroms Körner umfassenden körnigen Guts, welcher momentan abgesperrten, von einem beispielsweise einen Rotor umfassenden Verteiler abgehenden, zu jeweils mindestens einem Ausbringungsorgan führenden Leitungen zugedacht ist beziehungsweise war, zumindest schwerkraftgestützt einem Sammel-, insbesondere Tiefpunkt zugeführt wird. Anschließend, beispielsweise durch einen Heberotor, vorzugsweise durch einen erwähnten Rotor selbst oder durch einen einen Heberotor bildenden Teil des Rotors, werden zumindest diese sich am Sammel-, insbesondere Tiefpunkt sammelnden Körner in Rotation um eine Rotationsachse versetzt, vorzugsweise um die Rotationsachse des Rotors beziehungsweise des Heberotors. Die Körner drängen sich durch die beispielsweise zunehmende Rotation an einer radialen Begrenzung, insbesondere einer beispielsweise bevorzugt mitrotierenden Rotorwandung, insbesondere Heberotorwandung, weg von der Rotationsachse.

Durch von unten nach oben stetige Zunahme des Abstands der radialen Begrenzung zur Rotationsachse wird durch die Rotation um die Rotationsachse eine Transportbewegung entgegen der Schwerkraft mit einer Bewegungskomponente in Richtung parallel der Rotationsachse erzeugt. Beispielsweise eignet sich hierzu ein Heberotor mit einer umgekehrt, d.h. sich von unten nach oben stetig weitenden, trichterförmigen Heberotorwandung, deren jüngster Querschnitt sich unten, nahe des Tiefpunkts, an dem sich die Körner sammeln, befindet.

Damit die Körner aus dem Sammel- und/oder Tiefpunkt zunächst das erste Stück angehoben werden, ohne vom Boden eines Sammelbehältnisses gekratzt zu werden, können diese, beispielsweise durch einen oder mehrere um die Rotationsachse rotierende, beispielsweise strömungstechnisch angestellte Flügel, aufgemischt und dadurch auf- beziehungsweise hochgewirbelt werden. Durch die Aufmischung unter Rotation zeigen die Körner Tendenz, tangential weg von der Rotationsachse zu streben, wodurch sie dann für den weiteren Aufstieg von der vorzugsweise mitrotierenden radialen Begrenzung erfasst und durch bloße Reibung - zunächst Haftreibung, dann mit zunehmender Rotationsgeschwindigkeit aufgrund des sich weitenden Querschnitts Gleitreibung - an deren zur Rotationsachse zugewandter Oberfläche mitgenommen werden.

Alternativ oder zusätzlich kann die Förderung der Körner aus dem Tiefpunkt zumindest in den umgekehrt trichterförmigen Heberotor hinein beispielsweise durch eine an der die radiale Begrenzung bildenden Heberotorwandung nach innen zur Rotationsachse hin abstehend angeordnete, schneckenförmige Förderspindel unterstützt werden.

Die radiale Begrenzung wird oberhalb einer Abgabeebene des Verteilers aufgehoben. Hierdurch folgen die bis dato entgegen der Schwerkraft geförderten Körner der Zentrifugalkraft und werden nach außen, von der Rotationsachse weg geschleudert. Beispielsweise kann die radiale Begrenzung in einem Querschnitt mit einem ohnehin in einem Verteiler angeordneten Rotor enden. Hierdurch können die bis dato entgegen der Schwerkraft geförderten Körner einem beispielsweise stetig neu in den Verteiler eintretenden Körnerstrom wieder beigemengt werden.

Vorteilhaft kann der Körnerstrom Teil eines Mischstroms mit einem als Trägermedium für den Körnerstrom dienenden Luftstrom sein.

Vorteile gegenüber dem Stand der Technik sind eine Anhebung des beispielsweise von einem Verteiler aufgrund Absperrung einzelner Leitungen nicht ausgebrachten Teils Körner umfassenden körnigen Guts entgegen der Schwerkraft von einem Sammel- und/oder Tiefpunkt. Dies erlaubt weitgehende Gestaltungsfreiheit bei der konstruktiven Ausgestaltung von zur Ausbringung körnigen Guts vorgesehenen, insbesondere landwirtschaftlichen Maschinen, beispielsweise Sämschinen. Ein Vorteil der Verwendung eines beispielsweise schnell drehenden Rotors gegenüber einem Schneckenförderer, wie etwa einer archimedischen Schraube, ist die senkrechte Anordnung der Rotationsachse sowie die Einhaltung einer Unversehrtheit der Körner, da es zu keinerlei Quetschsituationen kommt. Darüber hinaus kann durch Kombination mit einem Verteiler mit einem sich drehenden Rotor, wie beispielsweise in den Patentanmeldungen DE 10 2016 010 270 und DE 10 2016 010 954 und in den hieraus hervorgegangen internationalen Patentanmeldungen mit den internationalen Aktenzeichen PCT/EP2017/071254 und PCT/EP2017/072545 beschrieben, auf zusätzliche Antriebe verzichtet werden. Lediglich der ohnehin vorhandene Rotor kann um einen kurz als Heberotor bezeichenbaren, koaxial dichter an der Rotationsachse angeordneten, zusätzlichen Rotor ergänzt werden, welcher die Anhebung der ursprünglich abgesperrten Leitungen zugedachten Körner von einem Tief- beziehungsweise Sammelpunkt entgegen der Schwerkraft besorgt.

Vorteilhafte Weiterbildungen der Erfindung können von der Erzeugung eines Mischstroms bis hin zu einer Rückführung der entgegen der Schwerkraft geförderten Körner in ein körniges Gut zur Beimengung zu einem als Trägermedium eines Mischstroms dienenden Luftstrom vorhaltendes Reservoir und/oder Beimengung der entgegen der Schwerkraft geförderten Körner zu einem bereits erzeugten Mischstrom reichende Schritte und Merkmale umfassen.

So kann beispielsweise erfindungsgemäß vorgesehen sein, dass zunächst ein Mischstrom durch Beimengung Körner umfassenden körnigen Guts zu einem als Trägermedium dienenden Luftstrom erzeugt wird.

Der Mischstrom wird anschließend in Richtung parallel zu einer Rotationsachse einem um die Rotationsachse drehenden Rotor zugeführt. Hierdurch werden die Körner sowohl parallel zur Rotationsachse bewegt, als auch in Rotation um die Rotationsachse versetzt.

Vorzugsweise verläuft die Bewegungsrichtung parallel zur Rotationsachse hierbei in Richtung der Gravitationskraft.

Durch die Rotation drängen sich die Körner weg von der Rotationsachse.

Nunmehr kann die Erfindung vorsehen, Körner umfassendes körniges Gut und Luftstrom zu trennen.

Dies ist insbesondere vorteilhaft, weil hierdurch vorgesehen werden kann, den Luftstrom oder Teile desselben frei von Körnern beispielsweise durch per Absperrung von der Kornablage ausgeschlossene zu Ausbringungsorganen führende Leitungen entweichen zu lassen. Dadurch wird der Luftstrom im Verteiler nicht unvorteilhaft aufgestaut und dessen Träger- beziehungsweise Transporteigenschaft für Körner zumindest bis in den Verteiler bleibt uneingeschränkt erhalten. Hierdurch wird ein zusätzlicher konstruktiver Freiheitsgrad zur räumlichen Trennung von Körner umfassendes körniges Gut bevorratendem Reservoir und Verteiler erhalten.

Der Luftstrom verlässt hierzu als erstes den Rotor in mindestens einer in Transportrichtung entlang beziehungsweise parallel zur Rotationsachse gesehen ersten Abgabeebene - kurz Luftabgabeebene - durch radial nach innen zur Rotationsachse versetzte Mündungen von ersten Radialöffnungen.

Nach einem Weitertransport entlang beziehungsweise parallel zur Rotationsachse verlässt anschließend ein kurz als Körnerstrom bezeichneter, beispielsweise steter Massenstrom Körner umfassenden körnigen Guts als zweites in mindestens einer in Transportrichtung entlang beziehungsweise parallel zur Rotationsachse gesehen zweiten Abgabeebene - kurz Körnerabgabeebene - den Rotor durch eine oder mehrere Kornabgabeöffnungen, beispielsweise in der zweiten Abgabeebene am Außenumfang des Rotors angeordnete zweite Radialöffnungen.

Bereits mit der Trennung oder nach der erfolgten Trennung von Luftstrom und Körnerstrom wird der Luftstrom in eine der Anzahl der beispielsweise vom den um die Rotationsachse drehbaren Rotor umfassenden Verteiler abgehenden, zu jeweils mindestens einem Ausbringungsorgan führenden Leitungen entsprechende Zahl von Teilluftströmen aufgeteilt.

Jeder Teilluftstrom strebt einer zu jeweils mindestens einem Ausbringungsorgan führenden Leitung zu und strömt hiernach durch eine zu jeweils mindestens einem Ausbringungsorgan führende Leitung.

Offen verbleibenden Leitungen zugedachte Körner verlassen den Rotor in mindestens einer zweiten Abgabeebene beziehungsweise Körnerabgabeebene. In dieser streben sie mindestens einer offen verbleibenden und zu jeweils mindestens einem Ausbringungsorgan führenden Leitung zu und werden mit dem oder den dieser mindestens einen offen verbleibenden Leitung zugeordneten Teilluftstrom zu einem Teilmischstrom mit dem diesem als Trägermedium dienenden Teilluftstrom vermengt. Die so erzeugten Teilmischströme strömen hiernach durch die eine oder mehreren offen verbleibenden, zu jeweils mindestens einem Ausbringungsorgan führenden Leitungen.

Zur Kornablage nicht vorgesehenen Ausbringungsorganen führenden, kurz als abgesperrt bezeichneten Leitungen zugedachte Körner überspringen die mindestens eine zweite Abgabeebene beziehungsweise Körnerabgabeebene, in denen sie bei Verlassen der Rotors mindestens einer zu jeweils mindestens einem Ausbringungsorgan führenden Leitung zugeführt werden würden. Beispielsweise kann hierzu ein beispielsweise eine radiale Begrenzung innerhalb einer zweiten Abgabeebene bildender Schieber im Rotor vorgesehen sein, der bei Einnahme einer entsprechenden Stellung für bestimmten zweiten Abgabeebenen beziehungsweise Körnerabgabeebenen zugedachte Körner in Richtung parallel zur Rotationsachse über diese zweiten Abgabeebenen beziehungsweise Körnerabgabeebenen hinweg rutschen lässt, ohne dass diese dort den Rotor verlassen beziehungsweise aus ihrer Rotationsbewegung um die Rotationsachse heraus entlassen werden.

Schließlich erreichen die ursprünglich abgesperrten Leitungen zugedachten Körner eine dritte Abgabeebene beziehungsweise Körnerabgabeebene, bei deren Erreichen sie sich selbst überlassen werden. Mit dem Erreichen der dritten Abgabeebene beziehungsweise Körnerabgabeebene streben diese daher der Schwerkraft folgend einem Sammel- und/oder Tiefpunkt zu.

Mit Erreichen des Sammel- und/oder Tiefpunkts werden diese sich am Sammel-, insbesondere Tiefpunkt sammelnden Körner in Rotation beispielsweise durch einen Heberotor, vorzugsweise durch den erwähnten Rotor selbst, oder durch einen einen Heberotor bildenden Teil des Rotors um eine Rotationsachse versetzt, vorzugsweise um die Rotationsachse des Rotors. Die Körner drängen sich durch die beispielsweise zunehmende Rotation an einer radialen Begrenzung, insbesondere einer beispielsweise bevorzugt mitrotierenden Heberotorwandung, weg von der Rotationsachse.

Durch von unten nach oben stetige Zunahme des Abstands der radialen Begrenzung zur Rotationsachse wird durch die Rotation um die Rotationsachse eine Transportbewegung entgegen der Schwerkraft mit einer Bewegungskomponente in Richtung parallel der Rotationsachse erzeugt. Beispielsweise eignet sich hierzu ein Heberotor mit einer umgekehrt, d.h. sich von unten nach oben stetig weitenden, trichterförmigen Heberotorwandung, deren jüngster Querschnitt sich unten, nahe des Tiefpunkts, an dem sich die Körner sammeln, befindet.

Die radiale Begrenzung wird oberhalb den Abgabeebenen des Verteilers aufgehoben. Hierdurch folgen die bis dato entgegen der Schwerkraft geförderten Körner der Zentrifugalkraft und werden nach außen, von der Rotationsachse weg geschleudert. Hierdurch werden die bis dato entgegen der Schwerkraft geförderten Körner einem vom Anfangs erzeugten Mischstrom umfassten, stetig neu in den Verteiler eintretenden Körnerstrom wieder beigemengt.

Zwischen den beschriebenen Ausführungsvarianten sind ein Vielzahl von Ausgestaltungen denkbar, welche alle den Gedanken eines Transports von einer Verteilung auf mehrere zu jeweils mindestens einem Ausbringungsorgan führenden Leitungen ausgeschlossenen, Körner umfassenden körnigen Guts entgegen der Schwerkraft durch Rotation um eine Rotationsachse unter Drängung gegen eine radiale Begrenzung und unter Streben in Richtung einer Weitung der radialen Begrenzung weg von der Rotationsachse aufgreifen.

Derartige vorteilhafte Ausgestaltungen sind in der nachfolgenden, den Zeichnungen zugeordneten Beschreibung und den Ansprüchen wiedergegeben.

Die Erfindung kann einzelne oder mehrere einleitend in Verbindung mit dem Stand der Technik oder den hierzu zitierten Dokumenten erwähnte Merkmale aufweisen.

Alternativ oder zusätzlich kann das Verfahren einzelne oder mehrere in Verbindung mit der Vorrichtung voranstehend oder nachfolgend insbesondere in Zusammenhang mit der zu den Zeichnungen zugehörigen Beschreibung noch beschriebene Merkmale aufweisen und/oder verwirklichen, genauso wie die Vorrichtung alternativ oder zusätzlich einzelne oder mehrere in Verbindung mit dem Verfahren voranstehend oder nachfolgend insbesondere in Zusammenhang mit der zu den Zeichnungen zugehörigen Beschreibung noch beschriebene Merkmale aufweisen und/oder verwirklichen kann.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung, die erfindungsgemäße Einrichtung und das erfindungsgemäße Verfahren ausgestaltet sein können und stellen keine abschließende Begrenzung dar. Es zeigen in schematischer Darstellung:
Fig. 1 ein erstes Ausführungsbeispiel einer Vorrichtung zur Verteilung Körner umfassenden körnigen Guts auf eine veränderliche Anzahl von beispielsweise zu jeweils mindestens einem Ausbringungsorgan führenden Leitungen, insbesondere Saatleitungen, in längs geschnittener Ansicht.
Fig. 2 ein zweites Ausführungsbeispiel einer Vorrichtung zur Verteilung Körner umfassenden körnigen Guts auf eine veränderliche Anzahl von beispielsweise zu jeweils mindestens einem Ausbringungsorgan führenden Leitungen, insbesondere Saatleitungen, in längs geschnittener Ansicht.
Fig. 3 ein drittes Ausführungsbeispiel einer Vorrichtung zur Verteilung Körner umfassenden körnigen Guts auf eine veränderliche Anzahl von beispielsweise zu jeweils mindestens einem Ausbringungsorgan führenden Leitungen, insbesondere Saatleitungen, in längs geschnittener Ansicht.
Fig. 4 eine Detailansicht eines Rotors einer Vorrichtung zur Verteilung Körner umfassenden körnigen Guts auf eine veränderliche Anzahl von beispielsweise zu jeweils mindestens einem Ausbringungsorgan führenden Leitungen, insbesondere Saatleitungen, gemäß eines in Fig. 3 gezeigten Ausführungsbeispiels, in teilweise geschnittener, perspektivischer Ansicht.
Fig. 5 ein viertes Ausführungsbeispiel einer Vorrichtung zur Verteilung Körner umfassenden körnigen Guts auf eine veränderliche Anzahl von beispielsweise zu jeweils mindestens einem Ausbringungsorgan führenden Leitungen, insbesondere Saatleitungen, in einem ersten Betriebszustand in längs geschnittener Ansicht.
Fig. 6 das vierte Ausführungsbeispiel der Vorrichtung zur Verteilung Körner umfassenden körnigen Guts auf eine veränderliche Anzahl von beispielsweise zu jeweils mindestens einem Ausbringungsorgan führenden Leitungen, insbesondere Saatleitungen, aus Fig. 5 in einem zweiten Betriebszustand.
Fig. 7 ein fünftes Ausführungsbeispiel einer Vorrichtung zur Verteilung Körner umfassenden körnigen Guts auf eine veränderliche Anzahl von beispielsweise zu jeweils mindestens einem Ausbringungsorgan führenden Leitungen, insbesondere Saatleitungen, in einem ersten Betriebszustand in längs geschnittener Ansicht.
Fig. 8 ein Ablaufdiagramm eines Verfahrens zur Verteilung Körner umfassenden körnigen Guts auf eine veränderliche Anzahl von beispielsweise zu jeweils mindestens einem Ausbringungsorgan führenden Leitungen, insbesondere Saatleitungen.

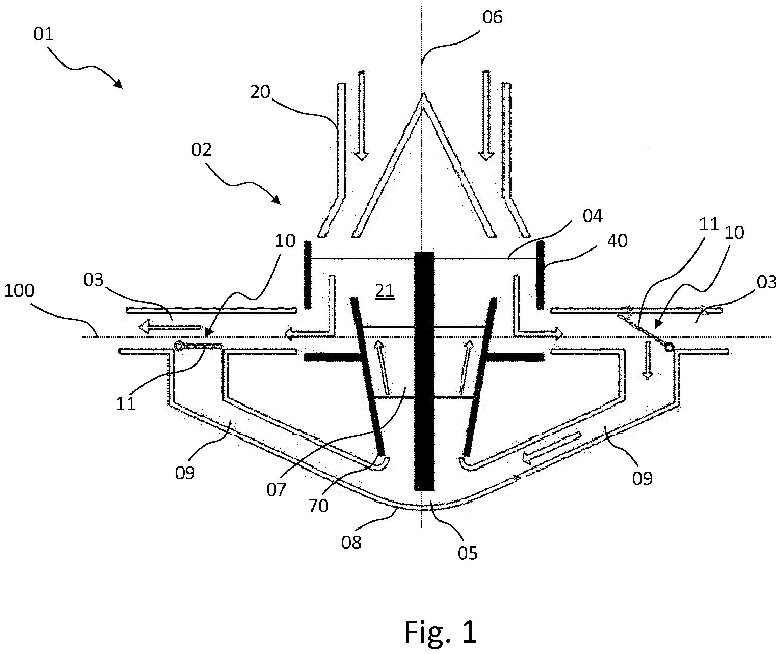

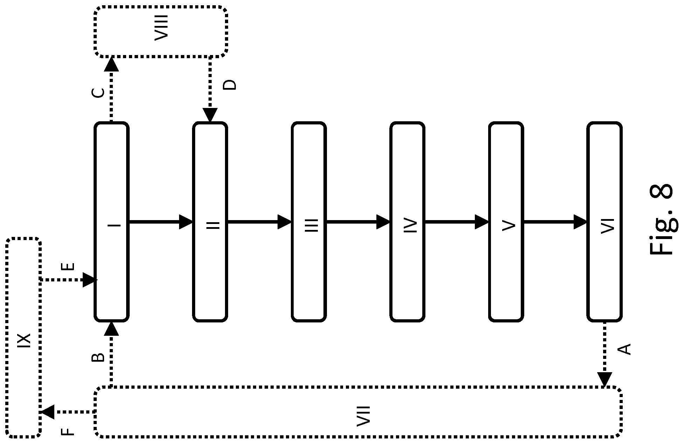

Ein in Fig. 8 in seinem Ablauf dargestelltes Verfahren zur Verteilung Körner umfassenden körnigen Guts auf eine veränderliche Anzahl von beispielsweise zu jeweils mindestens einem Ausbringungsorgan führenden, von einem Verteiler 02 innerhalb mindestens einer in Fig. 1, Fig. 2, Fig. 3, Fig. 5, Fig. 6 und Fig. 7 durch gestrichelte Linien angedeuteten Abgabeebene 100, 101, 102 abgehenden Leitungen 03, insbesondere Saatleitungen, sieht vor, bedarfsweise eine oder mehrere Leitungen 03, auf welche das Körner umfassende körnige Gut verteilt werden soll, abzusperren. Die bedarfsweise Absperrung kann beispielsweise eine oder mehrere Leitungen beispielsweise zumindest einer Abgabeebene 100, 101, 102 betreffen. Grundsätzlich können auch eine oder mehrere Leitungen 03 mehrerer Abgabeebenen 100, 101, 102 von einer momentanen, bedarfsweisen Absperrung betroffen sein.

Der Verteiler 02 sowie die zur Veranschaulichung des Verfahrens beispielhaft beschriebenen Einrichtungen können Teil einer beispielsweise in Fig. 1, Fig. 2, Fig. 3, Fig. 4, Fig. 5, Fig. 6 und Fig. 7 ganz oder teilweise dargestellten und zur Durchführung eines erfindungsgemäßen Verfahrens geeigneten Vorrichtung 01 zur Verteilung Körner umfassenden körnigen Guts auf eine veränderliche Anzahl von beispielsweise zu jeweils mindestens einem Ausbringungsorgan führenden Leitungen 03, insbesondere Saatleitungen, sein.

Das erfindungsgemäße Verfahren sieht in einem ersten Verfahrensschritt I vor, dass zumindest derjenige Teil eines kurz als Körnerstrom bezeichneten Stroms Körner umfassenden körnigen Guts, welcher momentan abgesperrten, von einem beispielsweise einen Rotor 04 umfassenden Verteiler 02 abgehenden, zu jeweils mindestens einem Ausbringungsorgan führenden Leitungen 03 zugedacht ist beziehungsweise war, zumindest schwerkraftgestützt einem Sammel-, insbesondere Tiefpunkt 05 zugeführt wird.

In einem sich an den ersten Verfahrensschritt I anschließenden zweiten Verfahrensschritt II sieht das Verfahren vor, dass zumindest diese sich am Sammel- und/oder Tiefpunkt 05 sammelnden Körner in Rotation um eine Rotationsachse 06 versetzt werden. Dies kann beispielsweise durch einen Heberotor 07 erfolgen. Bei der Rotationsachse 06 handelt es sich vorzugsweise um die Rotationsachse eines gegebenenfalls ohnehin als Teil des Verteilers 02 vorhandenen Rotors 04. Vorteilhaft kann der Heberotor 07 durch mindestens einen Teil eines gegebenenfalls ohnehin als Teil des Verteilers 02 vorhandenen Rotors 04 gebildet sein, insbesondere durch einen konzentrisch zwischen Rotor 04 und zu dessen Rotationsachse 06 angeordneten Teil.

In einem auf den zweiten Verfahrensschritt II folgenden dritten Verfahrensschritt III sieht das Verfahren vor, dass sich die Körner durch die beispielsweise zunehmende Rotation an einer radialen Begrenzung mit einer von unten nach oben stetigen Zunahme ihres Abstands gegenüber beziehungsweise weg von der Rotationsachse 06 drängen. Die radiale Begrenzung kann insbesondere durch eine beispielsweise bevorzugt mitrotierende Heberotorwandung 70 gebildet sein. Hierdurch tritt auch der Grund für die getroffene Einschränkung einer beispielsweise zunehmenden Rotation hervor: Rotiert die radiale Begrenzung mit, rührt sie die Körner im Sammel- und/oder Tiefpunkt 05 zunächst nur gering durch die Gleitreibung zwischen ihr und den Körnern. Mit zunehmender Rotation verstärkt sich die Gleitreibung. Mit zunehmender Reibungskraft nimmt die Beschleunigung der Körner daraufhin zu, bis diese - in Vorgriff auf den vierten Verfahrensschritt IV - abgesehen von einem möglichen Schlupf beispielsweise durch das Gleiten in Richtung zunehmendem Abstand der radialen Begrenzung zur Rotationsachse 06 in etwa die Rotationsgeschwindigkeit, genauer die Rotationswinkelgeschwindigkeit der mitrotierenden radialen Begrenzung aufweisen.

In einem auf den dritten Verfahrensschritt III darauffolgenden vierten Verfahrensschritt IV sieht das Verfahren vor, dass durch die Rotation der Körner um die Rotationsachse 06 in Verbindung mit der von unten nach oben stetigen Zunahme des Abstands der radialen Begrenzung gegenüber der Rotationsachse 06 eine Aufstiegs- beziehungsweise Transportbewegung der Körner entgegen der Schwerkraft mit einer Bewegungskomponente in Richtung parallel der Rotationsachse 06 erzeugt wird. Die Körner beschreiben dabei bevorzugt eine aufsteigende, helixförmige Spiralbahn, beispielsweise mit mit zunehmendem Abstand von der Rotationsachse 06 zunehmender Ganghöhe.

Der Vollständigkeit halber sei an dieser Stelle hervorgehoben, dass die Verwendung des Begriffs «Körner» keinerlei Einschränkung im Vergleich zum Ausdruck «Körner umfassenden körnigen Guts» sowie zum Ausdruck «körniges Gut» darstellt, ebensowenig wie dies umgekehrt der Fall ist, es sei denn, es ist explizit etwas anderes erwähnt.

In einem auf den vierten Verfahrensschritt IV folgenden fünften Verfahrensschritt V sieht das Verfahren vor, dass die radiale Begrenzung oberhalb der Abgabeebene des Verteilers 02 aufgehoben wird.

In einem sich an den fünften Verfahrensschritt V anschließenden sechsten Verfahrensschritt VI sieht das Verfahren schließlich vor, dass die bis dato entgegen der Schwerkraft geförderten Körner der Zentrifugalkraft folgen und nach außen, von der Rotationsachse 06 weg geschleudert werden.

Dort können sie wiederum gesammelt werden und beispielsweise schwerkraftgestützt einem körniges Gut vorhaltenden Reservoir zugeführt werden, aus dem die der Verteilung zugeführten Körner stetig geschöpft beziehungsweise gefördert werden. Alternativ können sie direkt der erneuten Verteilung im Verteiler 02 zugeführt werden, wo sie sich nunmehr oberhalb der Abgabeebene 100, 101, 102 befinden.

Es ist ersichtlich, dass das erfindungsgemäße Verfahren einer Wiederzuführung von aufgrund einer oder mehrerer bedarfsweise momentan abgesperrter Leitungen 03 bei einer vorangehenden Verteilung körnigen Guts auf eine veränderliche Anzahl von Leitungen 03 nicht zum Zuge gekommenen körnigen Guts zu einer erneuten Verteilung auf eine veränderliche Anzahl von Leitungen 03 dient oder zumindest dienen kann, wie dies in Fig. 8 anhand eines gestrichelten Pfeils A angedeutet durch einen auf den sechsten Verfahrensschritt VI folgenden, siebten Verfahrensschritt VII dargestellt ist, auf den wiederum durch einen gestrichelten Pfeil B angedeutet der erste Verfahrensschritt I folgen kann. In diesem siebten Verfahrensschritt VII werden die am Abschluss des sechsten Verfahrensschritts VI weg geschleuderten Körner erneut einer Verteilung Körner umfassenden körnigen Guts auf eine veränderliche Anzahl von beispielsweise zu jeweils mindestens einem Ausbringungsorgan führenden Leitungen 03 zugeführt. Für die bei dieser erneuten Verteilung auf eine veränderliche Anzahl von Leitungen 03 aufgrund einer oder mehrerer bedarfsweise momentan abgesperrter Leitungen 03 nicht zum Zuge gekommenen Körner beginnt das Verfahren daraufhin erneut mit dem ersten Verfahrensschritt I.

Demnach können gemäß dem Verfahren die aus dem Sammel-, insbesondere Tiefpunkt bis dato entgegen der Schwerkraft geförderten Körner dem stetig neu der Verteilung auf eine veränderliche Anzahl von Leitungen 03 zugedachten, beispielsweise in den Verteiler eintretenden, kurz als Körnerstrom bezeichneten Strom Körner umfassenden körnigen Guts mittelbarbeispielsweise durch Zufuhr zu einem Körner umfassendes körniges Gut vorhaltenden Reservoir - oder unmittelbar - beispielsweise durch Entlassen in den Verteiler 02 oberhalb der Abgabeebene 100, 101, 102 - wieder beigemengt werden.

Durch das Verfahren werden momentan abgesperrten Leitungen 03 zugedachte Körner wieder einem Niveau oberhalb der momentan abgesperrten Leitungen 03 zugeführt, von wo aus sie beispielsweise schwerkraftgestützt einem körniges Gut vorhaltendem Reservoir zugeführt werden können, um von dort aus erneut der Verteilung auf eine veränderliche Anzahl von Leitungen 03 zugedacht zu werden, oder sie können direkt wieder der Verteilung zugedacht werden, um nur einige denkbare Ausgestaltungsmöglichkeiten zu nennen. Die Freiheit bei der konstruktiven Ausgestaltung wird in jedem Fall erheblich gesteigert, als wenn die Körner am Sammel- und/oder Tiefpunkt 05 verbleiben würden. Darüber hinaus können ohnehin zur Verteilung auf eine veränderliche Anzahl von Leitungen 03 erforderliche Einrichtungen, wie etwa ein um eine Rotationsachse 06 rotierender Rotor 04, ein Teil dessen als ein Heberotor 07 bildet oder umfasst, oder welcher von einem Heberotor 07 umfasst wird, verwendet werden, um die Körner entgegen der Schwerkraft anzuheben.

Ein besonders hervorzuhebender Vorteil in Verbindung mit einer Anhebung und einer sich hieran anschließenden, beispielsweise schwerkraftgestützten oder zumindest schwerkraftunterstützten Rückführung der zu einem körniges Gut vorhaltenden Reservoir ist eine exakte Beibehaltung eines für eine optimale Standraumzuteilung eingestellten Körnerstroms beziehungsweise von Teilkörnerströmen in den offen verbleibenden Leitungen 03, da diejenigen, abgesperrten Leitungen 03 zugedachten Körner des aus dem Reservoir geförderten Körnerstroms zum Reservoir zurückgeführt werden. Die Förderung des Körnerstroms aus dem Reservoir kann demnach unabhängig von der Anzahl der momentan abgesperrten Leitungen 03 konstant gehalten werden, ohne dass sich die Massenströme der durch die nicht abgesperrten, offen verbleibenden Leitungen 03 abgehenden Teilkörnerströme erhöhen. Hierdurch wird eine Einsparung körnigen Guts bei dessen Ausbringung erreicht, ganz gleich, ob es sich hierbei um Saatgut oder um Dünge- und/oder Pflanzenschutzmittel handelt.

Das Verfahren kann in einem wie in Fig. 8 durch gestrichelte Pfeile C und D angedeutet optionalen, zwischen dem ersten Verfahrensschritt I und dem zweiten Verfahrensschritt II liegenden achten Verfahrensschritt VIII vorsehen, dass die sich am Sammel-, insbesondere Tiefpunkt 05 sammelnden Körner, beispielsweise durch einen oder mehrere um die Rotationsachse 06 rotierende, beispielsweise strömungstechnisch angestellte Flügel, aufgemischt und dadurch zunächst auf- beziehungsweise hochgewirbelt werden.

Vorteilhaft kann das Verfahren vorsehen, dass im dritten Verfahrensschritt III die radiale Begrenzung um die Rotationsachse 06 mitrotiert und die Körner für den beispielsweise nach dem Aufwirbeln weiteren Aufstieg von der vorzugsweise mitrotierenden radialen Begrenzung erfasst und durch bloße Reibung - zunächst gegebenenfalls Haftreibung, dann mit zunehmender Rotationsgeschwindigkeit aufgrund des sich weitenden Querschnitts der radialen Begrenzung und dem hiermit im vierten Verfahrensschritt IV einsetzenden Aufstiegs- beziehungsweise Transportbewegung der Körner entgegen der Schwerkraft Gleitreibung - an deren zur Rotationsachse zugewandter Oberfläche mitgenommen werden.

Das Verfahren kann vorsehen, dass ein stetig neu der Verteilung auf mehrere Leitungen 03 zugedachter, beispielsweise in den Verteiler 02 eintretender, kurz als Körnerstrom bezeichneter Strom Körner umfassenden körnigen Guts Teil eines Mischstroms mit einem als Trägermedium für den Körnerstrom dienenden Luftstrom ist.

Das Verfahren kann im Falle, dass der Körnerstrom Teil eines Mischstroms mit einem als Trägermedium für den Körnerstrom dienenden Luftstrom ist, wie in Fig. 8 durch einen gestrichelten Pfeil E angedeutet optionalen, vor dem ersten Verfahrensschritt I stattfindenden neunten Verfahrensschritt IX vorsehen, dass der Mischstrom vor oder spätestens mit der Verteilung auf mehrere Leitungen 03 wieder in mindestens einen Luftstrom und mindestens einen Körnerstrom separiert wird. Hierbei wird der Luftstrom vorteilhaft in eine der Gesamtzahl der Leitungen entsprechende Zahl von Teilluftströmen aufgeteilt, von denen jeder durch jeweils eine der beispielsweise zu jeweils mindestens einem Ausbringungsorgan führenden, von dem Verteiler 02 abgehenden Leitungen 03 entweicht. Der momentan abgesperrten, von dem beispielsweise einen Rotor 04 umfassenden Verteiler 02 abgehenden, zu jeweils mindestens einem Ausbringungsorgan führenden Leitungen 03 zugedachte Teil des Körnerstroms wird dem Sammel- und/oder Tiefpunkt 05 zugeführt. Der verbleibende Teil des Körnerstroms wird in Teilkörnerströme auf die Anzahl der Leitungen 03, auf welche der Körnerstrom momentan verteilt werden soll, aufgeteilt. Die Teilkörnerströme werden den Leitungen 03, auf welche der Körnerstrom momentan verteilt werden soll, unter Erzeugung jeweils eines Teilmischstroms mit dem als Trägermedium für den Teilkörnerstrom dienenden, durch die jeweilige Leitung 03 entweichenden Teilluftstrom zugeführt.

Hierdurch wird ein Zusammenbrechen des als Trägermedium dienenden Luftstroms wirkungsvoll vermieden. Hierdurch hält der Luftstrom uneingeschränkt seine ihm zugedachte Transportaufgabe im Mischstrom und in jedem Teilmischstrom bei. Dies schafft einen zusätzlichen konstruktiven Gestaltungsspielraum entsprechender mit einer oder mehreren Vorrichtungen 01 zur Verteilung Körner umfassenden körnigen Guts auf eine veränderliche Anzahl von beispielsweise zu jeweils mindestens einem Ausbringungsorgan führenden, von einem Verteiler 02 abgehenden Leitungen 03, insbesondere Saatleitungen, Ausbringungsmaschinen, insbesondere Sämaschinen. Der Gestaltungsspielraum erlaubt ebenso wie die Anhebung nicht der Verteilung zugekommener, ursprünglich momentan abgesperrten Leitungen 03 zugedachter Körner entgegen der Schwerkraft eine entfernte Anordnung von Körner umfassendem körnigen Gut vorhaltendem Reservoir und Verteiler 02.

Zusätzlich kann im gegebenenfalls vorgesehenen, optionalen neunten Verfahrensschritt IX vorgesehen sein, dass der Körnerstrom in eine der Anzahl der Leitungen 03, auf welche der Körnerstrom momentan verteilt werden soll, zuzüglich eins entsprechende Zahl von Teilkörnerströmen aufgeteilt wird. Von der nach der Aufteilung erhaltenen Zahl von Teilkörnerströmen wird ein Teilkörnerstrom dem Sammel- und/oder Tiefpunkt 05 zugeführt. Die verbleibenden Teilkörnerströme werden den Leitungen 03, auf welche der Körnerstrom momentan verteilt werden soll, unter Erzeugung eines Teilmischstroms mit dem als Trägermedium für den Teilkörnerstrom dienenden, durch die jeweilige Leitung 03 entweichenden Teilluftstrom zugeführt.

Alternativ kann zusätzlich im gegebenenfalls vorgesehenen, optionalen neunten Verfahrensschritt IX vorgesehen sein, dass der Körnerstrom in eine der Gesamtzahl der Leitungen 03 entsprechende Zahl von Teilkörnerströmen aufgeteilt wird, von denen jeder zunächst jeweils einer Leitung 03 der Gesamtheit der Leitungen 03 zugeführt wird, anschließend die Teilkörnerströme der momentan abgesperrten, von dem beispielsweise einen Rotor 04 umfassenden Verteiler 02 abgehenden, zu jeweils mindestens einem Ausbringungsorgan führenden Leitungen 03 dem Sammel- und/oder Tiefpunkt 05 zugeführt werden, und die verbleibenden Teilkörnerströme den Leitungen 03, auf welche der Körnerstrom momentan verteilt werden soll, unter Erzeugung eines Teilmischstroms mit dem als Trägermedium für den Teilkörnerstrom dienenden, durch die jeweilige Leitung 03 entweichenden Teilluftstrom zugeführt werden.

Das Verfahren kann wie in Fig. 8 durch einen gestrichelten Pfeil F angedeutet vorsehen, dass ein zuvor beschriebener optionaler, vor dem ersten Verfahrensschritt I stattfindender neunter Verfahrensschritt IX im Anschluss an einen optionalen siebten Verfahrensschritt VII ausgeführt wird, in welchem die am Abschluss des sechsten Verfahrensschritts VI weg geschleuderten Körner erneut einer Verteilung Körner umfassenden körnigen Guts auf eine veränderliche Anzahl von beispielsweise zu jeweils mindestens einem Ausbringungsorgan führenden Leitungen 03 zugeführt werden. Für die bei dieser erneuten Verteilung auf eine veränderliche Anzahl von Leitungen 03 aufgrund einer oder mehrerer bedarfsweise momentan abgesperrter Leitungen 03 nicht zum Zuge gekommenen Körner beginnt das Verfahren mit dem neunten Verfahrensschritt IX, bevor auf diesen wieder der erste Verfahrensschritt I folgt.

Ein voranstehend beschriebenes Verfahren kann durch eine in Fig. 1, Fig. 2, Fig. 3, Fig. 4, Fig. 5, Fig. 6 und Fig. 7 ganz oder teilweise dargestellte und zur Durchführung eines zuvor beschriebenen Verfahrens geeignete Vorrichtung 01 zur Verteilung Körner umfassenden körnigen Guts auf eine veränderliche Anzahl von beispielsweise zu jeweils mindestens einem Ausbringungsorgan führenden Leitungen 03, insbesondere Saatleitungen verwirklicht werden.

Die Vorrichtung 01 umfasst einen Verteiler 02 mit einem von einem Gehäuse 20 zumindest zum Teil umgebenen Verteilerraum 21, von dem eine Gesamtzahl von bedarfsweise zumindest zum Teil absperrbaren Leitungen 03 zumindest innerhalb einer Abgabeebene 100, 101, 102 abgehen.

Die Vorrichtung 01 umfasst außerdem einen unterhalb des Verteilerraums 21 an einem Sammel- und/oder Tiefpunkt 05 angeordnetes oder ausgebildetes Sammelbehältnis 08, beispielsweise in Form einer Schale, in welches momentan abgesperrten Leitungen 03 zugedachte Körner zumindest der Schwerkraft folgend fallen.

Das Sammelbehältnis 08 kann vom Gehäuse 20 umfasst sein oder einen Teil des Gehäuses 20 bilden. Das Sammelbehältnis 08 umgibt einen den Sammel- und/oder Tiefpunkt 05 umfassenden Sammelraum.

Die Vorrichtung 01 umfasst außerdem einen sich entlang einer Rotationsachse 06 erstreckenden Heberotor 07, der mit seinem unteren Ende in das Sammelbehältnis 08 reicht und mit seinem oberen Ende über die Abgabeebene 100, 101, 102 ragt.

Der Heberotor 07 ist mit einer einen von unten nach oben stetig zunehmenden Querschnitt begrenzenden, konzentrisch zur Rotationsachse 06 in von unten nach oben stetig zunehmendem Abstand zu dieser angeordneten, beispielsweise umgekehrt trichterförmigen Heberotorwandung 70 ausgestattet. Die Heberotorwandung 70 bildet eine sich von unten nach oben stetig weitende radiale Begrenzung. Der jüngste Querschnitt der Heberotorwandung 70 befindet sich unten, nahe oberhalb des Sammel- und/oder Tiefpunkt 05, an dem sich die Körner sammeln. Der weiteste Querschnitt der Heberotorwandung 70 befindet sich oberhalb der Abgabeebene 100, 101, 102.

Beispielsweise kann die eine radiale Begrenzung für die entgegen der Schwerkraft anzuhebenden Körner bildenden Heberotorwandung 70 in einem Querschnitt mit einem ohnehin in dem Verteiler 02 angeordneten Rotor 04 enden.

Die Heberotorwandung 70 kann um die Rotationsachse 06 drehbar angeordnet sein. Hierdurch wird kein zusätzliches Element benötigt, um die einmal im Heberotor 07 in Rotation versetzten Körner zu ihrer Rotation um die Rotationsachse 06 anzutreiben.

Alternativ kann die Heberotorwandung 70 um die Rotationsachse 06 fest stehend angeordnet sein. Der Heberotor 07 umfasst hierbei mindestens eine von der Heberotorwandung 70 umgebene, um die Rotationsachse 06 umlaufend angetriebene, beispielsweise annähernd bis zur Heberotorwandung 70 reichende anschiebende Wand, beispielsweise in Form einer radial von der Rotationsachse 06 abstehende Platte oder in Form einer Bürste mit im Wesentlichen radial von der Rotationsachse 06 abstehenden Borsten.

Damit die Körner aus dem Sammel- und/oder Tiefpunkt 05 zunächst das erste Stück angehoben werden, ohne vom Boden des Sammelbehältnisses 08 gekratzt werden zu müssen, können diese, beispielsweise durch einen oder mehrere um die Rotationsachse 06 rotierende, beispielsweise strömungstechnisch angestellte Flügel, aufgemischt und dadurch auf- beziehungsweise hochgewirbelt werden. Durch die Aufmischung unter Rotation zeigen die Körner Tendenz, tangential weg von der Rotationsachse 06 zu streben, wodurch sie dann für den weiteren Aufstieg von der vorzugsweise mitrotierenden Heberotorwandung 70 erfasst und durch bloße Reibung - zunächst beispielsweise Haftreibung, dann mit zunehmender Rotationsgeschwindigkeit aufgrund des sich weitenden Querschnitts Gleitreibung - an deren zur Rotationsachse 06 zugewandter Oberfläche mitgenommen werden.

Alternativ oder zusätzlich kann die anfängliche Förderung der Körner aus dem Sammelbehältnis 08 zumindest bis in den umgekehrt trichterförmigen Heberotor 07 hinein beispielsweise durch eine an der die radiale Begrenzung bildenden Heberotorwandung 70 nach innen zur Rotationsachse 06 hin abstehend angeordnete, schneckenförmige Förderspindel unterstützt werden.

Vorteilhaft umfasst die Vorrichtung 01 von den absperrbaren Leitungen 03 abgehende und in das Sammelbehältnis 08 mündende Rückführungsleitungen 09 sowie beispielsweise als verstellbare Weichen 11 ausgeführte oder solche umfassende Absperrmittel 10 für die vom Verteiler 02 abgehenden, absperrbaren Leitungen 03.

Beispielsweise können die Absperrmittel 10 wie in Fig. 1, Fig. 2, Fig. 3 dargestellt in den vom Verteiler 02 abgehenden, absperrbaren Leitungen 03 angeordnet sein.

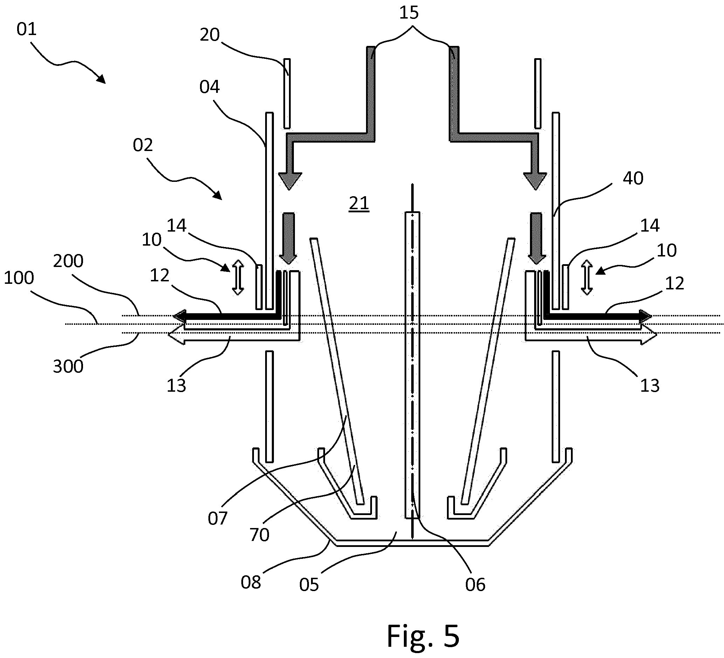

Alternativ können die Absperrmittel 10 wie in Fig. 5, Fig. 6 und Fig. 7 dargestellt eine oder mehrere beispielsweise axial zur Rotationsachse 06 verschiebbar angeordnete Blenden 14 umfassen, mit denen ganze Abgabeebenen 100, 101, 102 abgesperrt werden können, einhergehend mit einer Absperrung sämtlicher in der jeweiligen Abgabeebene 100, 101, 102 vom Verteiler 02 abgehenden Leitung 03.

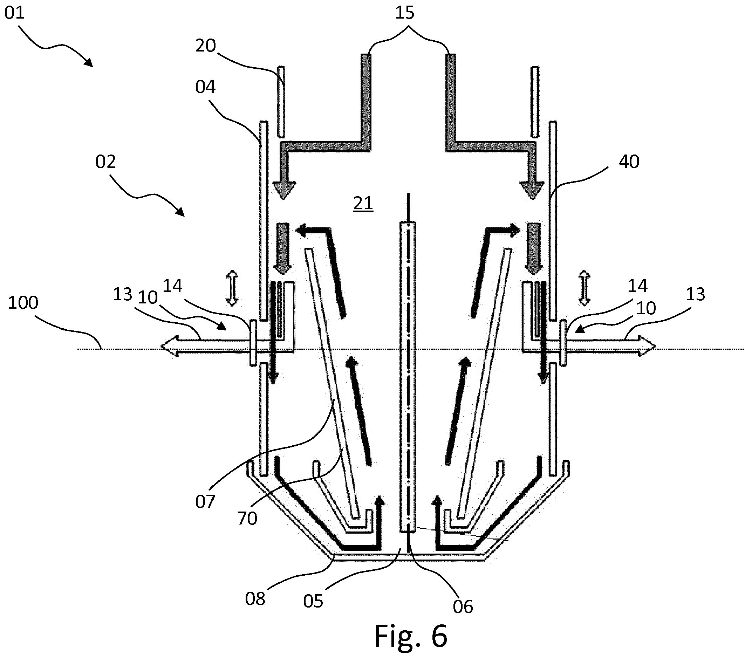

Die Absperrmittel 10 können grundsätzlich nur für die Körner unpassierbar ausgeführt sein, wie dies beispielsweise in Fig. 5 und Fig. 6 dargestellt ist, wobei in Fig. 5 bei geöffneten Blenden 14 sowohl Teilkörnerströme 12, als auch Teilluftströme 13, die sich in den abgehenden Leitungen wieder zu Teilmischströmen mit den als Trägermedien für die Teilkörnerströme 12 dienenden Teilluftströmen 13 vermengen, vom Rotor 04 abgehen, und in Fig. 6 trotz geschlossener Blenden 14 Teilluftströme 13 durch die Blenden 14 hindurch aus dem Rotor 04 entweichen, die dann über die in der entsprechenden Abgabeebene 100 an den Verteiler 02 angeschlossenen angeschlossenen Leitungen 03 entweichen. Körner können diese Blenden 14 nicht überwinden.

Jedes in einer vom Verteiler 02 abgehenden, absperrbaren Leitung 03 angeordnete, beispielsweise als verstellbare Weiche 11 ausgeführte oder eine solche umfassende Absperrmittel 10 leitet zumindest das Körner umfassende Körnige Gut wahlweise der jeweiligen vom Verteiler 02 abgehenden Leitung 03 oder im Falle einer bedarfsweisen Absperrung der jeweiligen Leitung 03 der entsprechenden Rückführungsleitung 09 und damit dem Sammelbehältnis 08 zum Zweck der anschließenden Anhebung entgegen der Schwerkraft zu.

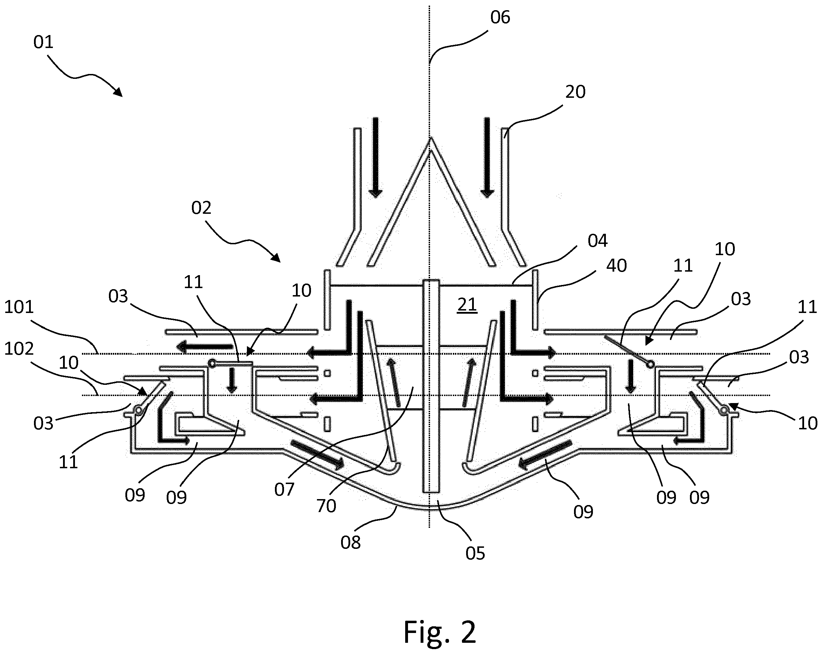

Sind beispielsweise mehrere Abgabeebenen 101, 102 vorgesehen, können mehrere Rückführungsleitungen 09 zunächst zu einer gemeinsamen Rückführungsleitung 09 zusammengefasst sein, die dann in das Sammelbehältnis 08 mündet (Fig. 2). Alternativ oder zusätzlich können auch mehrere Rückführungsleitungen 09 einer Abgabeebene 100 zu einer gemeinsamen, in das Sammelbehältnis mündenden Rückführungsleitung 09 zusammengeführt sein.

Bei einer Rückführungsleitung 09 kann es sich grundsätzlich auch um einen Ringraum oder um einen Ringraumabschnitt handeln, welcher in das Sammelbehältnis übergeht.

Eine besonders vorteilhafte Ausgestaltung der erfindungsgemäßen Vorrichtung 01 sieht vor, dass ein bevorzugt ebenfalls um die selbe Rotationsachse 06, wie der Heberotor 07, drehbar angeordneter Rotor 04 mit einer konzentrisch zu der Rotationsachse 06 angeordneten Rotorwandung 40 in dem Verteilerraum 20 angeordnet ist, in welchen ein in den Verteiler 02 eintretender Körnerstrom mündet, wie dies in Fig. 1, Fig. 2, Fig. 3, Fig. 4, Fig. 5, Fig. 6 und Fig. 7 ganz oder teilweise dargestellt ist, wie beispielsweise in den Patentanmeldungen DE 10 2016 010 270 und DE 10 2016 010 954 und in den hieraus hervorgegangen internationalen Patentanmeldungen mit den internationalen Aktenzeichen PCT/EP2017/071254 und PCT/EP2017/072545 beschrieben.

Der Heberotor 07 einer solchen Vorrichtung 01 kann Teil des Rotors 04 sein, diesen umfassen oder von diesem umfasst sein.

Bevorzugt stimmen die Rotationsachsen 06 des Rotors 04 und des Heberotors 07 miteinander überein.

Wichtig ist in diesem Zusammenhang hervorzuheben, dass im vorliegenden Dokument der Begriff Achse im Gegensatz zu dem Begriff Welle eine geometrische Achse und nicht ein Maschinenelement bezeichnet.

Vorteilhaft kann das einen in den Verteilerraum 21 eintretenden Körnerstrom bildende, Körner umfassende körnige Gut Teil eines Mischstroms mit einem als Trägermedium für den Körnerstrom dienenden Luftstrom sein.

Die Vorrichtung 01 kann in diesem Fall Mittel zur Erzeugung eines Mischstroms mit einem als Trägermedium für den Körnerstrom dienenden Luftstrom umfassen. Beispielsweise eignet sich hierzu ein Gebläse zur Erzeugung des Luftstroms und ein Zellenrad zur Zudosierung Körner umfassenden körnigen Guts zu dem Luftstrom.

Alternativen sind eine Zugabe vereinzelter Körner und/oder ähnliche Maßnahmen, wie beispielsweise in den erwähnten Patentanmeldungen DE 10 2016 010 270 und DE 10 2016 010 954 und in den hieraus hervorgegangen internationalen Patentanmeldungen mit den internationalen Aktenzeichen PCT/EP2017/071254 und PCT/EP2017/072545 beschrieben.

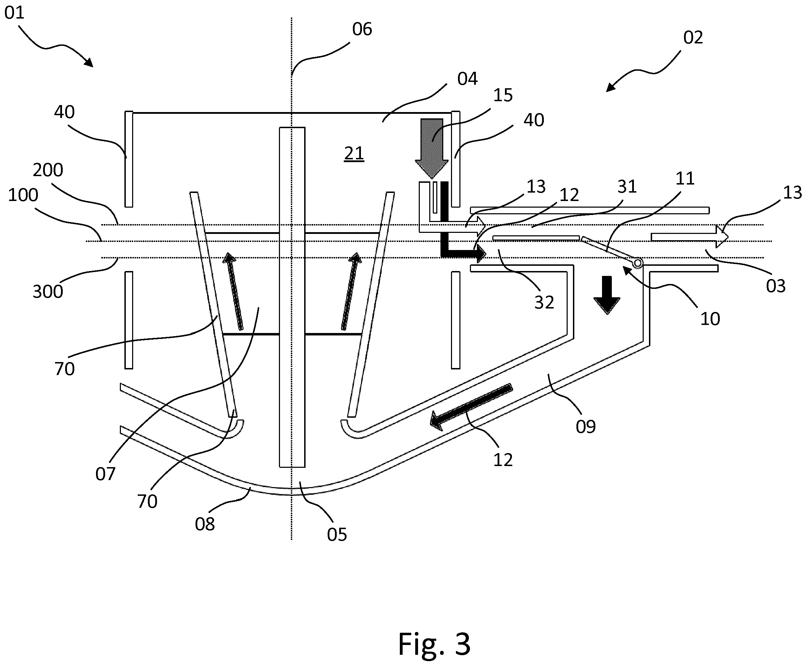

Eine in Fig. 3, Fig. 4, Fig. 5 und Fig. 6 ganz oder teilweise gezeigte, besonders vorteilhafte Weiterbildung einer erfindungsgemäßen Vorrichtung 01 mit einem in dem Verteilerraum 21 angeordneten bevorzugt ebenfalls um die selbe Rotationsachse 06, wie der Heberotor 07, drehbar angeordneter Rotor 04, der mit einer konzentrisch zu der Rotationsachse 06 angeordneten Rotorwandung 40 ausgestattet ist und in welchen ein in den Verteiler 02 eintretender Körnerstrom mündet, sieht vor, dass:
- der Körnerstrom Teil eines Mischstroms mit einem als Trägermedium für den Körnerstrom dienenden Luftstrom ist,
- der den Körnerstrom umfassende Mischstrom entlang der Rotationsachse 06 in den Verteilerraum 21 des Verteilers 02 eintritt,
- die Rotorwandung 40 um die Rotationsachse 06 drehbar angeordnet ist,
- in der Rotorwandung 40 in mindestens einer in Eintrittsrichtung des Mischstroms gesehen kurz als Luftabgabeebene 200 bezeichneten ersten Abgabeebene erste Radialöffnungen als Luftaustrittsöffnungen 41 angeordnet sind, durch welche Teilluftströme 13 aus dem Rotor 04 austreten,
- in der Rotorwandung 40 in mindestens einer in Eintrittsrichtung des Mischstroms gesehen kurz als Kornabgabeebene 300 bezeichneten zweiten Abgabeebene zweite Radialöffnungen als Kornaustrittsöffnungen 42 angeordnet sind, durch welche Teilkörnerströme 12 aus dem Rotor 04 austreten, und
- die Luftaustrittsöffnungen 41 durch radial nach innen zur Rotationsachse 06 hin abstehende Trennwände 43 von den beispielsweise in Umfangsrichtung zwischen ihnen angeordneten, die Kornabgabeöffnungen 42 aufweisenden Partien der Innenseite der Rotorwandung 40 abgegrenzt sind, so dass aufgrund der Rotation von innen gegen die Rotorwandung 40 gedrängtes und aufgrund des Luftstroms und der Schwerkraft entlang der Rotationsachse 06 transportiertes Körner umfassendes körniges Gut den Rotor 04 nicht durch die Luftaustrittsöffnungen 41 in der mindestens einen kurz als Luftabgabeebene 200 bezeichneten ersten Abgabeebene verlassen kann, sondern bis zu wenigstens einer dem Körner umfassenden körnigen Gut zugedachten kurz als Kornabgabeebene 300 bezeichneten zweiten Abgabeebene weitertransportiert wird, um schließlich den Rotor 04 zumindest zum Teil durch die dort befindlichen Kornaustrittsöffnungen 42 zu verlassen.

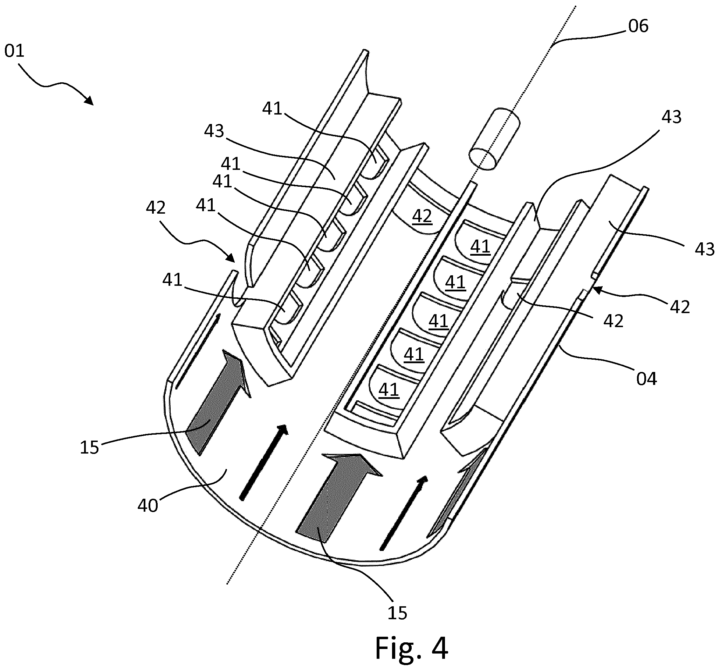

Grundsätzlich kann beim in Fig. 4 dargestellten Rotor 04 jede in der selben Ebene über den Umfang des Rotors 04 um die Rotationsachse 06 verteilte Anordnung von Luftaustrittsöffnungen 41 eine Abgabeebene 100, 101, 102 definieren. Die Kornaustrittsöffnungen 42 einer Austrittsebene 100, 101, 102 können gemeinsam durch eine Blende 14 wie in Fig. 5, Fig. 6, Fig. 7 absperrbar sein, um die Kornabgabe an in einer oder mehreren Abgabeebenen 100, 101, 102 vom Verteiler 02 abgehende Leitungen zu unterbinden. Alternativ können in den vom Verteiler abgehenden Leitungen 03 zumindest für die Körner undurchlässige Absperrmittel 10 vorgesehen sein, um einzelne Leitungen 03 gezielt abzusperren (Fig. 1, Fig. 2).

Eine zusätzliche Alternative ergibt sich durch eine Absperrung ausschließlich der Teilkörnerströme 12 in der mindestens einen von der oder den Abgabeebenen 100, 101, 102 umfassten Kornabgabeebene 300, wie in Fig. 3 dargestellt.

In den jeweils eine Luftabgabeebene 200 und eine Kornabgabeebene 300 umfassende Abgabeebenen 100, 101, 102 sind eine oder mehrere vom Verteiler abgehende Leitungen angeordnet, durch welche zumindest die Teilluftströme 13 entweichen.

Die vom Verteiler 02 abgehenden Leitungen 03 können wie in Fig. 3 dargestellt je eine Mündung für einen Teilluftstrom 13 und für einen Teilkörnerstrom 12, kurz je eine Luftmündung 31 und je eine Kornmündung 32, umfassen.

Die Leitungen 03 können Absperrmittel 10, insbesondere Weichen 11 umfassen, welche zumindest den beispielsweise durch eine Kornmündung 32 in eine Leitung 03 eintretenden Teilkörnerstrom 12 oder einen einen Teilkörnerstrom umfassenden Teilmischstrom wahlweise der zu einem Ausbringungsorgan weiterführenden Leitung 03, oder einer Rückführungsleitung 09 zuführen beziehungsweise zulenken.

Die Leitungen 03 können darüber hinaus Zusammenführungen ihrer Luftmündungen und Ihrer Kornmündungen umfassen. Diese können durch entsprechende Anordnung der Absperrmittel 10, insbesondere Weichen 11 verwirklicht sein, wie dies beispielsweise in Fig. 3 durch eine Weiche 11 angedeutet ist, die in einer Stellung, bei der der Teilkörnerstrom nicht der Rückführungsleitung 09, sondern der abgehenden Leitung 03 zugeführt wird, den durch einen schwarzen Pfeil in Fig. 3 angedeuteten Teilkörnerstrom 12 und den durch einen weißen Pfeil in Fig. 3 angedeuteten Teilluftstrom 13 zu einem Teilmischstrom vereint. Fig. 3 zeigt eine Stellung der Weiche 11, in der dies nicht der Fall ist. Der der durch die momentane, dargestellte Stellung der Weiche 11 abgesperrten Leitung 03 zugeführte Teilkörnerstrom 12 wird in der in Fig. 3 gezeigten Stellung der Weiche 11 dem Sammelbehältnis 08 am Sammel- und/oder Tiefpunkt 05 zugeführt, wo sich die Körner sammeln, die nicht auf Leitungen 03 verteilt wurden. Durch die rotierende, sich nach oben konisch weitende Heberotorwandung 70 des Heberotors 07 werden diese Körner entgegne der Schwerkraft bis oberhalb der Abgabeebene 100, welche die Luftabgabeebene 200 und die Kornabgabeebene 300 umfasst, angehoben, von wo aus sie erneut einer Verteilung auf eine veränderliche Anzahl von Leitungen 03 zugeführt werden können.

Die Teilluftströme 13 können den Verteiler 02 durch jeweils eine von diesem abgehende Leitung 03 verlassen. Die Teilkörnerströme 12 der nicht abgesperrten Leitungen 03 werden mit dem jeweiligen, als Trägermedium dienenden, durch die entsprechende Leitung 03 entweichenden Teilluftstrom zu Teilmischströmen vereint.

Das abgesperrten Leitungen 03 zugedachte körnige Gut kann entlang der Rotationsachse 06 den Rotor 04 verlassen und in das Sammelbehältnis 08 fallen.

Bei einer solchen Ausgestaltung können beispielsweise durch eine axiale Verschiebung etwa einer Blende die Kornmündungen 32 einer oder mehrerer vom Verteiler 02 abgehender Leitungen 03 in einer oder in mehreren Kornabgabeebenen 300 bedeckt werden.

Alternativ kann das den gesamten Körnerstrom bildende Körner umfassende körnige Gut in eine der Gesamtzahl von vom Verteiler 02 abgehenden Leitungen 03 entsprechende Zahl von Teilkörnerströmen 12 aufgeteilt werden. Diese münden dann aus dem Rotor 04 in der einen oder den mehreren Kornabgabeebenen 300 in die entsprechenden Kornmündungen 32 der vom Verteiler 02 abgehenden Leitungen 03. Das Absperren einer oder mehrerer vom Verteiler 02 abgehender Leitungen erfolgt in diesem Fall beispielsweise durch beschriebene Absperrmittel 10, die zumindest den Teilkörnerstrom 12 einer betroffenen Leitung 03 via einer Rückführungsleitung 09 zum Sammelbehältnis 08 umlenken.

Eine zusätzliche Alternative ergibt sich, wenn auf eine generelle Trennung von Teilluftströmen 13 und Teilkörnerströme 12 verzichtet wird, wie dies in Fig. 5 und Fig. 6 der Fall ist. Bei einer solchen Ausgestaltung kann beispielsweise durch eine in Fig. 5 und Fig. 6 durch Doppelpfeile angedeutete axiale Verschiebung etwa einer für die Körner undurchlässigen Blende 14 die Kornabgabe zu einer oder mehrerer in mindestens einer Abgabeebene 100 vom Verteiler 02 abgehender Leitungen 03 blockiert werden, wohingegen Teilluftströme 13 weiterhin aus dem Rotor 04 austreten und durch die Leitungen 03 entweichen können.

Wichtig ist hervorzuheben, dass bei der Erfindung ein Rotor 04, insbesondere ein in Fig. 1 dargestellter Verteilrotor, welcher die Querverteilung eines auch als Verteilerkopf bezeichneten Verteilers 02, welches hierbei die gesamte in Fig. 1 dargestellte Verteileinheit darstellt, einer pneumatischen Sämaschine optimiert, dazu genutzt wird, die überschüssigen Körner der abgeschalteten Leitungen 03 (in Fig. 1 die rechte Leitung) wieder in den Saatfluss zurückzuführen. In Fig. 1 ist beispielhaft die rechte Leitung 03 abgesperrt. Hierzu nimmt ein als eine Weiche 11 ausgeführtes Absperrmittel 10 eine Stellung ein, bei der ein der momentan abgesperrten Leitung 03 zugeführter Teilkörnerstrom, der beispielsweise Teil eines Teilmischstroms mit einem als Trägermedium für den Teilkörnerstrom dienenden Teilluftstrom sein kann, in eine Rückführungsleitung 09 umgelenkt wird, welche zu einem an einem Sammel- und/oder Tiefpunkt 05 angeordneten Sammelbehältnis 08 führt.

Als Rotor 04 kommt ein Rotor in Betracht, wie er z.B. in den Patentanmeldungen DE 10 2016 010 270 und DE 10 2016 010 954 und in den hieraus hervorgegangen internationalen Patentanmeldungen mit den internationalen Aktenzeichen PCT/EP2017/071254 und PCT/EP2017/072545 beschrieben ist.

In in den Fig. 1 bis Fig. 7 dargestellten Ausführungsbeispielen wird mit Hilfe eines durch weiße Pfeile dargestellten Luftstroms ein durch schwarze Pfeile angedeuteter Körnerstrom, beispielsweise ein Saatgutstrom einer Verteilung zugeführt. Sind wie in Fig. 1, Fig. 2, Fig. 4, Fig. 7 keine schwarzen oder weißen Pfeile dargestellt, so handelt es sich beim in den Verteiler 02 eintretenden und durch die angeschlossenen, offenen Leitungen austretenden beispielsweise jeweils um einen Mischstrom mit einem als Trägermedium für den Körnerstrom dienenden Luftstrom beziehungsweise um einen entsprechenden Teilmischstrom oder um einen Körnerstrom beziehungsweise Teilkörnerstrom.

In Fig. 1 wird ein Misch- oder Körnerstrom gleichmäßig auf die abgehenden Leitungen 03 geführt. Beispielsweise mit Schaltklappen ausgeführte Weichen 11 umfassende Absperrmittel 10 können dabei die Richtung des Saatgutflusses ändern und diese zum Sammelbehältnis 08 am Sammel- und/oder Tiefpunkt 05 unterhalb des Rotors 04 führen. Dies wird benötigt, um eventuelle Fahrgassen oder andere Schaltzustände, bei welchen der Saatgutfluss in dieser Leitung 03 nicht notwendig ist, zu erzeugen, beispielsweise zum Abschalten eines Teiles der Arbeitsbreite.

Das Saatgut der abgeschalteten Leitungen 03 wird über auch als Rückführungskanal bezeichenbare Rückführungsleitungen 09 zum zentral am Sammel- und/oder Tiefpunkt 05 unterhalb des Rotors 04 und des Heberotors 07 angeordneten Sammelbehältnis 08 zurückgeführt. Die kegelige Kontur der Heberotorwandung 70 des Heberotors 07 sorgt dafür, dass die Körner gegen die Schwerkraft und die eventuell vorhandene entgegenströmende Luft nach oben transportiert werden. Im Rotor wird der rückgeführte Körnerstrom oberhalb der Abgabeebene 100 wieder dem ursprünglichen Körnerstrom zugeführt.

Hierbei kommen unter anderem drei Fördermöglichkeiten zum Einsatz:
Luftstrom als Trägermedium für den Körnerstrom im in den Verteiler 02 eintretenden Mischstrom,
- Schwerkraft während des Zurückrollens der Körner zum zentral am Sammel- und/oder Tiefpunkt 05 unterhalb des Rotors 04 und des Heberotors 07 angeordneten Sammelbehältnis 08 in den Rückführungsleitungen 09, und
   Fliehkraft während des Transports der Körner im Heberotor 07 gegen die Erdanziehungskraft.

Die in Fig. 2 dargestellte Ausführung stellt ein Beispiel eines Rotors 04 mit mehreren Abgabeebenen 101, 102 dar.

Hier erfolgt die Rückführung des in seinem Fluss durch schwarze Pfeile angedeuteten Saatgutes der abgeschalteten Reihen ebenfalls durch den Rücktransport über den Heberotor 07.

Bei der in Fig. 3 dargestellten Ausführung kann der einen Mischstrom 15 bildende Luftstrom mit Saatgut auf Grund der Fliehkraft im Rotor 04 aufgeteilt werden. In der Darstellung in Fig. 3 erfolgt die Aufteilung in einen Luftstrom und einen Saatgutstrom. Da mehrere Leitungen 03 innerhalb der die Luftabgabeebene 200 und die Kornabgabeebene 300 umfassenden Abgabeebene 100 vom Verteiler 02 abgehen, handelt es sich bei den aus dem Rotor 04 in die Leitungen 03 entweichenden Ströme und Teilluftströme 13 und um Teilkörnerströme 12.

Eine Darstellung einer Ausgestaltung eines zur Aufteilung eines Mischstroms in Teilluftströme 13 und in Teilkörnerströme 12 ist in Fig. 4 gezeigt.

Somit kann gewährleistet werden, dass ein Großteil der transportierenden Luft die Saatgutleitung verlässt, selbst wenn die zu transportierenden Körner im beispielsweise las Verteilerturm ausgeführten Verteiler 02 verbleiben oder nur ein auf einen ausgewählten Teil der Leitungen 03 verteilt werden.

Somit kann verhindert werden, dass bei einer Vielzahl von abgeschalteten Leitungen der in den Verteiler 02 eintretende Luftstrom noch genug fördernde Leistung erzeugen kann. Wird der abgehende Luftstrom zu weit reduziert, bricht dessen Transport- beziehungsweise Förderleistung ein.

Fig. 4. zeigt einen um eine Rotationsachse 06 drehbar angetriebenen, auch als Verteilrotor bezeichneten Rotor 04. Die Arbeitsweise derartiger Verteilerrotoren ist beispielsweise in den Patentanmeldungen DE 10 2016 010 270 und DE 10 2016 010 954 und in den hieraus hervorgegangen internationalen Patentanmeldungen mit den internationalen Aktenzeichen PCT/EP2017/071254 und PCT/EP2017/072545 beschrieben. Auf Grund der Rotation des Rotors 04 kann sichergestellt werden, dass sich die Körner außen an der Rotorwandung 40 befinden.

Die Körner wandern entlang der die Mantelfläche des zylindrischen Rotors 04 bildenden Rotorwandung 40 und erreichen die Austrittsöffnungen für die Körner der von den verschiedenen Abgabeebenen 100, 101, 102 des Verteilerturms umfassten Kornabgabeebenen 300 bildenden, als Radialöffnungen ausgeführten Kornaustrittsöffnungen 42.

Schwarze Pfeile in Fig. 4 deuten die Bewegungsrichtung der Körner zwischen den Trennwänden 43 an. Die Trennwände 43 können die Körner nicht überwinden, wodurch durch die Luftaustrittsöffnungen 41 ausschließlich Luft entweichen kann.

Hierdurch wird eine Aufteilung des in den Rotor 04 eintretenden Mischstroms 15 in Luft- und Körnerstrom beziehungsweise in Teilluftströme 13 und in Teilkörnerströme 12 erreicht.

Die Strömungsluft ist hingegen u. a. aufgrund der geringeren Dichte weniger von der Zentrifugalkraft beeinflusst. Diese Luft kann daher über durch die Trennwände 43 gebildete Absätze zu weiteren Öffnungen in der Zylinderwand fließen, welche als Radialöffnungen ausgeführte Luftaustrittsöffnungen 41 bilden.

Die Luftaustrittsöffnungen 41, durch die der Luftstrom entweicht, können dabei axial zu den Öffnungen des Saatgutflusses verschoben sein. Somit wird jedes Medium an einer anderen Stelle des Rotors 04 abgegeben.

Daher kann eine Trennung von Luft und Saatgut erreicht werden. Und der Saatgutfluss unabhängig vom Luftstrom gelenkt werden.

In Fig. 5 ist gezeigt, wie innerhalb eines Rotors 04, wie er z.B. in den Patentanmeldungen DE 10 2016 010 270 und DE 10 2016 010 954 und in den hieraus hervorgegangen internationalen Patentanmeldungen mit den internationalen Aktenzeichen PCT/EP2017/071254 und PCT/EP2017/072545 beschrieben ist, ebenfalls eine Schaltung einzelner Kanäle, etwa einer Fahrgasse, ermöglicht werden kann. Das in einem Mischstrom 15 eintretende Saatgut wird zunächst mit Hilfe des als Trägermedium für den Körnerstrom dienenden Luftstroms in den Rotor 04 transportiert. Anschließend kann mit Hilfe der Fliehkraft der Luftstrom in Form von aus dem Rotor 04 in einer von einer Abgabeebene 100 umfassten Luftabgabeebene 200 austretenden Teilluftströmen 13 vom Körnerstrom in Form von aus dem Rotor 04 in einer von einer Abgabeebene 100 umfassten Körnerabgabeebene 300 austretenden Teilkörnerströmen 12 getrennt werden. Teilluftstrom 13 und Teilkörnerstrom 12 vermischen sich wieder in den abgebenden Leitungen 03. Das Trennen des Saatgutes vom Luftstrom kann bei abgeschalteten Zuständen den Vorteil haben, dass der zum beispielsweise als Verteilerturm ausgeführten Verteiler fördernde Luftstrom genug fördernde Wirkung hat, selbst wenn teilweise Säreihen abgeschaltet werden.

Fig. 6 zeigt, wie im Falle einer Abschaltung der Leitungen nun ein mit dem Rotor 04 drehendes Element oder eine feststehende Abschlussblende, kurz eine in Fig. 5 und in Fig. 6 durch Doppelpfeile als in Richtung parallel zur Rotationsachse 06 hin- und hergängig beweglich angedeutete Blende 14 vor die Kornaustrittsöffnungen 42 für die Teilkörnerströme 12 geschoben wird. Die Luftaustrittsöffnungen 41 können dabei offen verbleiben. Alternativ kann die Blende 14 nur für die Körner unpassierbar sein, hierdurch kann eine vereinfachte konstruktive Ausgestaltung gewählt werden.

Der Saatgutfluss der verbleibenden Körner wird nun aufgrund der Blende 14 im Rotor 04 weitergeleitet. Aufgrund der Abscheidung der Luft erfolgt die Förderung der Körner dabei primär über die Erdanziehungskraft. An der Unterkante des Verteilers 02 angekommen, wird nun der Körnerfluss zunächst durch den Heberotor 07, beispielsweise eine zentrale Welle im Zentrum des Heberotors 07 im den Sammel- und/oder Tiefpunkt 05 einnehmenden Sammelbehältnis 08 leicht aufgerührt und anschließend nach der Überwindung der ersten Höhe im Zentrum des Heberotors 07 einer sich umgekehrt trichterförmig von unten nach oben weitenden, die Heberotorwandung 70 bildenden Mantelfläche zugeführt.

Aufgrund der Fliehkraft erfolgt ein Transport nach oben und der Körnerstrom der rückgeführten Körner wird dem ursprünglichen Körnerstrom wieder hinzugefügt.

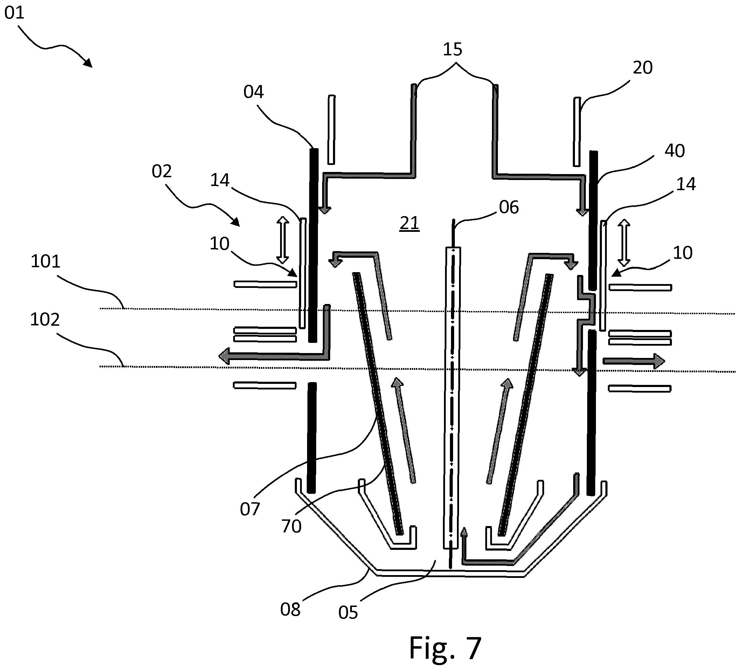

Somit können bei mehreren Abgabeebenen 101, 102 eines in Fig. 7 gezeigten Verteilers 02 einzelne Abgabeebenen 101, 102 abgeschaltete werden und die zurückgeführte Saatgutmenge der noch eingeschalteten Abgabeebene 102 zugeführt werden.

Die die Rotorwandung 40 bildende Mantelfläche des Verteilrotors kann ebenfalls konisch ausgeführt werden, um den axialen Transport der Körner sicherzustellen.

Die Erfindung ist insbesondere im Bereich der Herstellung landwirtschaftlicher Maschinen und Apparate, vor allem Verteilmaschinen, wie etwa Sämaschinen, insbesondere für die Drill- oder Mulchsaat, und/oder Düngerverteilmaschinen sowie Verteilvorrichtungen für solche Verteilmaschinen gewerblich anwendbar.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichen

- 01: Vorrichtung
- 02: Verteiler
- 03: Leitung
- 04: Rotor
- 05: Sammel- und/oder Tiefpunkt
- 06: Rotationsachse
- 07: Heberotor
- 08: Sammelbehältnis
- 09: Rückführungsleitung
- 10: Absperrmittel
- 11: Weiche
- 12: Teilkörnerstrom
- 13: Teilluftstrom
- 14: Blende
- 15: Mischstrom
- 20: Gehäuse
- 21: Verteilerraum
- 31: Luftmündung
- 32: Kornmündung
- 40: Rotorwandung
- 41: Luftaustrittsöffnung
- 42: Kornaustrittsöffnung
- 43: Trennwand
- 70: Heberotorwandung
- 100: Abgabeebene
- 101: Abgabeebene
- 102: Abgabeebene
- 200: Luftabgabeebene
- 300: Kornabgabeebene

## Patentansprüche

1. Verfahren zur Verteilung Körner umfassenden körnigen Guts auf eine veränderliche Anzahl von Leitungen (03), welches Verfahren vorsieht, bedarfsweise eine oder mehrere Leitungen (03) zumindest einer Abgabeebene (100, 101, 102) abzusperren, wobei:
- zumindest derjenige Teil Körner umfassenden körnigen Guts, welcher momentan abgesperrten Leitungen (03) zugedacht ist zumindest schwerkraftgestützt einem Sammelpunkt (05) zugeführt wird, **dadurch gekennzeichnet, dass**
- anschließend zumindest diese sich am Sammelpunkt (05) sammelnden Körner in Rotation um eine Rotationsachse (06) versetzt werden,
- sich die Körner durch die Rotation an einer radialen Begrenzung (70) mit einer von unten nach oben stetigen Zunahme ihres Abstands weg von der Rotationsachse (06) drängen,
- durch die Rotation um die Rotationsachse (06) aufgrund der von unten nach oben stetigen Zunahme des Abstands der radialen Begrenzung (70) gegenüber der Rotationsachse (06) eine Aufstiegsbewegung der Körner entgegen der Schwerkraft mit einer Bewegungskomponente in Richtung parallel der Rotationsachse (06) erzeugt wird,
- die radiale Begrenzung (70) oberhalb der Abgabeebene (100, 101, 102) aufgehoben wird, und
- dann die bis dato entgegen der Schwerkraft geförderten Körner der Zentrifugalkraft folgen und nach außen, von der Rotationsachse (06) weg geschleudert werden.

2. Verfahren nach Anspruch 1, wobei die sich am Sammelpunkt (05) sammelnden Körner zunächst aufgewirbelt werden.

3. Verfahren nach Anspruch 1 oder 2, wobei die radiale Begrenzung (70) um die Rotationsachse (06) mitrotiert und die Körner für den Aufstieg von der mitrotierenden radialen Begrenzung (70) erfasst und durch Reibung an deren zur Rotationsachse (06) zugewandter Oberfläche mitgenommen werden.

4. Verfahren nach Anspruch 1, 2 oder 3, wobei ein stetig neu der Verteilung auf eine veränderliche Anzahl von Leitungen (03) zugedachter Körnerstrom Teil eines Mischstroms (15) mit einem als Trägermedium für den Körnerstrom dienenden Luftstrom ist.

5. Verfahren nach Anspruch 4, wobei die aus dem Sammelpunkt (05) entgegen der Schwerkraft geförderten Körner dem stetig neu der Verteilung auf mehrere Leitungen (03) zugedachten Körnerstrom wieder beigemengt werden.

6. Verfahren nach Anspruch 4 oder 5, wobei vor oder spätestens mit der Verteilung auf eine veränderliche Anzahl von Leitungen (03) der Mischstrom (15) wieder in mindestens einen Luftstrom und mindestens einen Körnerstrom separiert wird, wobei der Luftstrom in eine der Gesamtzahl der Leitungen entsprechende Zahl von Teilluftströmen (13) aufgeteilt wird, von denen jeder durch jeweils eine der Leitungen (03) entweicht, der momentan abgesperrten Leitungen (03) zugedachte Teil des Körnerstroms dem Sammelpunkt zugeführt wird, und der verbleibende Teil des Körnerstroms in Teilkörnerströme (12) auf die Anzahl der Leitungen (03), auf welche der Körnerstrom momentan verteilt werden soll, aufgeteilt wird, wobei die Teilkörnerströme (12) den Leitungen (03) unter Erzeugung jeweils eines Teilmischstroms mit dem als Trägermedium für den Teilkörnerstrom (12) dienenden, durch die jeweilige Leitung (03) entweichenden Teilluftstrom (13) zugeführt werden.

7. Verfahren nach Anspruch 6, wobei der Körnerstrom in eine der Anzahl der Leitungen (03), auf welche der Körnerstrom momentan verteilt werden soll, zuzüglich eins entsprechende Zahl von Teilkörnerströmen (12) aufgeteilt wird, von denen einer dem Sammelpunkt (05) zugeführt wird, und die verbleibenden den Leitungen (03), auf welche der Körnerstrom momentan verteilt werden soll, unter Erzeugung eines Teilmischstroms mit dem als Trägermedium für den Teilkörnerstrom (12) dienenden, durch die jeweilige Leitung (03) entweichenden Teilluftstrom (13) zugeführt werden.

8. Verfahren nach Anspruch 6, wobei der Körnerstrom in eine der Gesamtzahl der Leitungen (03) entsprechende Zahl von Teilkörnerströmen (12) aufgeteilt wird, von denen jeder zunächst jeweils einer Leitung (03) zugeführt wird, anschließend die Teilkörnerströme (12) der momentan abgesperrten Leitungen (03) dem Sammelpunkt (05) zugeführt werden, und die verbleibenden den Leitungen (03), auf welche der Körnerstrom momentan verteilt werden soll, unter Erzeugung eines Teilmischstroms mit dem als Trägermedium für den Teilkörnerstrom (12) dienenden, durch die jeweilige Leitung (03) entweichenden Teilluftstrom (13) zugeführt werden.

9. Vorrichtung (01) zur Verteilung Körner umfassenden körnigen Guts auf eine veränderliche Anzahl von Leitungen (03), mit einem Verteiler (02) mit einem von einem Gehäuse (20) zumindest zum Teil umgebenen Verteilerraum (21), von dem eine Gesamtzahl von bedarfsweise zumindest zum Teil absperrbaren Leitungen (03) zumindest innerhalb einer Abgabeebene (100, 101, 102) abgehen, und mit einem unterhalb des Verteilerraums (21) an einem Sammelpunkt (05) angeordneten Sammelbehältnis (08), in welches momentan abgesperrten Leitungen (03) zugedachte Körner fallen, **gekennzeichnet durch** einen sich entlang einer Rotationsachse (06) erstreckenden Heberotor (07), der mit seinem unteren Ende in das Sammelbehältnis (08) reicht und mit seinem oberen Ende über die Abgabeebene (100, 101, 102) ragt, mit einer einen von unten nach oben stetig zunehmenden Querschnitt begrenzenden, konzentrisch zur Rotationsachse (06) angeordneten Heberotorwandung (70), deren jüngster Querschnitt sich unten, nahe oberhalb des Sammelpunkts (05) befindet, und deren weitester Querschnitt sich oberhalb der Abgabeebene (100, 101, 102) befindet.

10. Vorrichtung nach Anspruch 9, wobei die Heberotorwandung (70) um die Rotationsachse (06) drehbar angeordnet ist.

11. Vorrichtung nach Anspruch 9, wobei die Heberotorwandung (70) um die Rotationsachse (06) fest stehend angeordnet ist und der Heberotor (07) mindestens eine um die Rotationsachse (06) umlaufend angetriebene anschiebende Wand umfasst.

12. Vorrichtung nach Anspruch 9, 10 oder 11, wobei sie von den absperrbaren Leitungen (03) abgehende und in das Sammelbehältnis (05) mündende Rückführungsleitungen (09) sowie Absperrmittel (10, 11) in den vom Verteiler (02) abgehenden, absperrbaren Leitungen (03) umfasst, von denen jedes in einer vom Verteiler (02) abgehenden, absperrbaren Leitung (03) angeordnete Absperrmittel (10, 11) zumindest das Körner umfassende Körnige Gut wahlweise der jeweiligen vom Verteiler (02) abgehenden Leitung (03) oder im Falle einer bedarfsweisen Absperrung der entsprechenden Rückführungsleitung (09) und damit dem Sammelbehältnis (08) zuleitet.

13. Vorrichtung nach einem der Ansprüche 9 bis 12, wobei ein drehbar angeordneter Rotor (04) mit einer konzentrisch zu einer Rotationsachse (06) angeordneten Rotorwandung (40) in dem Verteilerraum (21) angeordnet ist, in welchen ein in den Verteiler (02) eintretender Körnerstrom mündet.

14. Vorrichtung nach Anspruch 13, wobei der Heberotor (07) Teil des Rotors (04) ist, diesen umfasst oder von diesem umfasst ist, und die Rotationsachsen (06) des Rotors (04) und des Heberotors (07) miteinander übereinstimmen.

15. Vorrichtung nach Anspruch 13 oder 14, wobei:
- der Körnerstrom Teil eines Mischstroms (15) mit einem als Trägermedium für den Körnerstrom dienenden Luftstrom ist,
- der Mischstrom (15) entlang der Rotationsachse (06) in den Verteiler (02) eintritt,
- die Rotorwandung (40) um die Rotationsachse (06) drehbar angeordnet ist,
- in der Rotorwandung (40) in mindestens einer in Eintrittsrichtung des Mischstroms (15) gesehen ersten Abgabeebene- kurz Luftabgabeebene (200) - erste Radialöffnungen als Luftaustrittsöffnungen (41) angeordnet sind, durch welche Teilluftströme (13) aus dem Rotor (04) austreten,
- in der Rotorwandung (40) in mindestens einer in Eintrittsrichtung des Mischstroms gesehen zweiten Abgabeebene - kurz Kornabgabeebene (300) - zweite Radialöffnungen als Kornaustrittsöffnungen (42) angeordnet sind, durch welche Teilkörnerströme (12) aus dem Rotor (04) austreten, und
- die Luftaustrittsöffnungen (41) durch radial zur Rotationsachse (06) hin abstehende Trennwände von den die Kornabgabeöffnungen (42) aufweisenden Partien der Rotorwandung (40) abgegrenzt sind.

## Claims

1. A method for distributing granular goods comprising grains to a variable quantity of pipes (03), said method being provided to block one or more pipes (03) at least of one discharge plane (100, 101, 102) as required, wherein:
- at least the part of the granular goods comprising grains, which is intended for momentarily blocked pipes (03) is fed to a collection point (05) at least in a gravity-supported manner, **characterised in that**
- subsequently at least these grains collecting at the collection point (05) are set into rotation about an axis of rotation (06),
- as a result of the rotation, the grains push against a radial boundary (70), the distance of the boundary away from the axis of rotation (06) increasing continuously in the upward direction,
- as a result of the rotation about the axis of rotation (06) due to the continuously upwardly increase of the distance of the radial boundary (70) compared with the axis of rotation (06), an upwards movement of the grains is produced acting against gravity with a movement component in a direction parallel to the axis of rotation (06),
- the radial boundary (70) ends above the discharge plane (100, 101, 102), and
- then the grains, previously conveyed against gravity, follow the centrifugal force and are flung outward away from the axis of rotation (06).

2. The method according to claim 1, wherein the grains collecting at the collection point (05) are initially whirled up.

3. The method according to claim 1 or 2, wherein the radial boundary (70) co-rotates about the axis of rotation (06) and the grains are gathered for the ascent by the co-rotating, radial boundary (70) and are carried along by friction on its surface facing towards the axis of rotation (06).

4. The method according to claim 1, 2 or 3, wherein a continuously new grain flow intended for distribution to a variable quantity of pipes (03) is part of a mixed flow (15) with an air flow serving as the carrier medium for the grain flow.

5. The method according to claim 4, wherein the grains conveyed from the collection point (05) against gravity are re-added to the continuously new grain flow intended for distribution to a number of pipes (03).

6. The method according to claim 4 or 5, wherein the mixed flow (15) is separated again into at least one air flow and at least one grain flow before or at least with the distribution to a variable quantity of pipes (03), wherein the air flow is separated into a number of partial air flows (13) corresponding to the total number of pipes, each of which escapes respectively through one of the pipes (03), the part of the grain flow intended for the momentarily blocked pipes (03) is fed to the collection point, and the remaining part of the grain flow is divided in partial grain flows (12) over the number of pipes (03), over which the grain flow should be momentarily distributed, wherein the partial grain flows (12) are fed to the pipes (03) by generating respectively a partial mixed flow with the partial air flow (13) acting as the carrier medium for the partial grain flow (12) and escaping through the respective pipe (03).

7. The method according to claim 6, wherein the grain flow is divided into a number of partial grain flows (12) corresponding to the number of pipes (03), plus one, over which the grain flow should be momentarily distributed, of which one is fed to the collection point (05), and the remaining are fed to the pipes (03), over which the grain flow should be momentarily distributed, by generating a partial mixed flow with the partial air flow (13) acting as the carrier medium for the partial grain flow (12) and escaping through the respective pipe (03).

8. The method according to claim 6, wherein the grain flow is divided into a number of partial grain flows (12) corresponding to the total number of pipes (03), each of which is initially fed respectively to a pipe (03), then the partial grain flows (12) of the momentarily blocked pipes (03) are fed to the collection point (05), and the remaining are fed to the pipes (03), over which the grain flow should be momentarily distributed, by generating a partial mixed flow with the partial air flow (13) acting as the carrier medium for the partial grain flow (12) and escaping through the respective pipe (03).

9. A device (01) for the distribution of granular goods comprising grains to a variable quantity of pipes (03), having a distributor (02) with a distribution chamber (21) surrounded at least partially by a housing (20), a total number of pipes (03) at least partially temporarily blockable branching off from said distribution chamber at least within a discharge plane (100, 101, 102), and having a collecting container (08) arranged at a collection point (05) below the distribution chamber (21), grains intended for momentarily blocked pipes (03) dropping into said collecting container, **characterised by** a lift rotor (07) extended along an axis of rotation (06), which reaches into the collecting container (08) with its lower end and protrudes over the discharge plane (100, 101, 102) with its upper end, with a lift rotor cladding (70) bordering a cross-section increasing upward continuously and arranged concentrically to the axis of rotation (06), its smallest cross-section of which being located at the bottom, closely above the collection point (05), and its widest cross-section being located above the discharge plane (100, 101, 102).

10. The device according to claim 9, wherein the lift rotor cladding (70) is pivotable about the axis of rotation (06).

11. The device according to claim 9, wherein the lift rotor cladding (70) is fixed about the axis of rotation (06) and the lift rotor (07) comprises at least one pushing wall driven in a circulating manner about the axis of rotation (06).

12. The device according to claim 9, 10 or 11, wherein it comprises return pipes (09) branching off from the blockable pipes (03) and discharging into the collecting container (05) along with block-off means (10, 11) in the blockable pipes (03) branching off from the distributor (02), each of the block-off means (10, 11) arranged in a blockable pipe (03) branching off from the distributor (02) feeds at least the granular goods comprising grains selectively to the respective pipe (03) branching off from the distributor (02) or in the case of a temporary block-off to the respective return pipe (09) and therefore to the collecting container (08).

13. The device according to one of claims 9 to 12, wherein a rotatably arranged rotor (04) with a rotor cladding (40) arranged concentrically to an axis of rotation (06) is arranged in the distribution chamber (21), into which a grain flow entering in the distributor (02) leads.

14. The device according to claim 13, wherein the lift rotor (07) is part of the rotor (04), surrounds or is surrounded by the same, and the axes of rotation (06) of the rotor (04) and of the lift rotor (07) correspond to one another.

15. The device according to claim 13 or 14, wherein:
- the grain flow is part of a mixed flow (15) with an air flow serving as the carrier medium for the grain flow,
- the mixed flow (15) enters the distributor (02) along the axis of rotation (06),
- the rotor cladding (40) is rotatably arranged about the axis of rotation (06),
- first radial openings are arranged in the rotor cladding (40) as air outlet openings (41) through which partial air flows (13) escape from the rotor (04), in at least one first discharge plane seen in the entry direction of the mixed flow (15) - air discharge plane for short (200),
- second radial openings are arranged in the rotor cladding (40) as grain outlet openings (42) through which partial grain flows (12) escape from the rotor (04), in at least one second discharge plane seen in the entry direction of the mixed flow - grain discharge plane for short (300) -, and
- the air outlet openings (41) are delimited by means of partition walls protruding radially to the axis of rotation (06) from the parts of the rotor cladding (40) featuring the grain output openings (42).

## Revendications

1. Procédé permettant de répartir un produit granuleux comprenant des grains sur un nombre variable de conduites (03), lequel procédé prévoit, selon les besoins, de bloquer une ou plusieurs conduites (03) d'au moins un plan de distribution (100, 101, 102), dans lequel :
- au moins la partie du produit granuleux comprenant des grains qui est attribuée aux conduites (03) momentanément bloquées est guidée au moins sous l'effet de la gravité vers un point de collecte (05), **caractérisé en ce que**
- ensuite, au moins les grains collectés au niveau du point de collecte (05) sont placés en rotation autour d'un axe de rotation (06),
- les grains se pressent, par la rotation, au niveau d'une limite radiale (70) dont la distance par rapport à l'axe de rotation (06) augmente de façon constante de bas en haut,
- par le biais de la rotation autour de l'axe de rotation (06) en raison de l'augmentation constante de bas en haut de la distance de la limite radiale (70) par rapport à l'axe de rotation (06), un mouvement d'ascension des grains à l'encontre de la gravité est produit, avec une composante de mouvement dans un sens parallèle à l'axe de rotation (06),
- la limite radiale (70) est supprimée au-dessus du plan de distribution (100, 101, 102) et
- ensuite les grains transportés jusqu'alors à l'encontre de la gravité suivent la force centrifuge et sont centrifugés vers l'extérieur à l'écart de l'axe de rotation (06).

2. Procédé selon la revendication 1, dans lequel les grains collectés au niveau du point de collecte (05) sont d'abord mis en suspension.

3. Procédé selon la revendication 1 ou 2, dans lequel la limite radiale (70) tourne conjointement autour de l'axe de rotation (06) et les grains sont saisis pour l'ascension par la limite radiale (70) en rotation et entraînés par frottement sur leur surface tournée vers l'axe de rotation (06).

4. Procédé selon la revendication 1, 2 ou 3, dans lequel un courant de grains attribué d'une manière sans cesse renouvelée à la répartition sur un nombre variable de conduites (03) forme une parte d'un courant mixte (15) avec un courant d'air servant de milieu porteur pour le courant de grains.

5. Procédé selon la revendication 4, dans lequel les grains transportés depuis le point de collecte (05) à l'encontre de la gravité sont mélangés au courant de grains attribué d'une manière sans cesse renouvelée à la répartition sur plusieurs conduites (03).

6. Procédé selon la revendication 4 ou 5, dans lequel avant ou au plus tard pendant la répartition sur un nombre variable de conduites (03), le courant mixte (15) est de nouveau séparé en au moins un courant d'air et au moins un courant de grains, le courant d'air étant réparti en un nombre de courants d'air partiels (13) correspondant au nombre total de conduites, dont chacun s'échappe par l'une des conduites (03), la partie du courant de grains attribuée aux conduites (03) momentanément bloquées étant guidée vers le point de collecte et la partie restante du courant de grains étant répartie en courants de grains partiels (12) sur le nombre de conduites (03) sur lesquelles le courant de grains doit être momentanément réparti, les courants de grains partiels (12) étant guidés vers les conduites (03) avec pour chacun production d'un courant mixte partiel avec le courant d'air partiel (13) servant de milieu support pour le courant de grains partiel (12) s'échappant par la conduite respective (03).

7. Procédé selon la revendication 6, dans lequel le courant de grains est réparti en un nombre de courants de grains partiels (12) correspondant au nombre de conduites (03) sur lesquelles le courant de grains doit être momentanément réparti, plus un, un des courants de grains partiels étant guidé vers le point de collecte (05) et le reste étant guidé vers les conduites (03) sur lesquelles le courant de grains doit momentanément être réparti, avec production d'un courant mixte partiel avec le courant d'air partiel (13) servant de milieu support pour le courant de grains partiel (12) et s'échappant par la conduite respective (03).

8. Procédé selon la revendication 6, dans lequel le courant de grains est réparti dans un nombre de courants de grains partiels (12) correspondant au nombre total de conduites (03), chacun des courants de grains partiels étant d'abord guidé vers une conduite (03) respective, ensuite les courants de grains partiels (12) attribués aux conduites (03) momentanément bloquées sont guidés vers le point de collecte (05) et le reste étant guidé vers les conduites (03), sur lesquelles le courant de grains doit momentanément être réparti, avec production d'un courant mixte partiel avec le courant d'air partiel (13) servant de milieu support pour le courant de grains partiel (12) et s'échappant par la conduite respective (03).

9. Dispositif (01) permettant de répartir un produit granuleux comprenant des grains sur un nombre variable de conduites (03), comprenant un distributeur (02) avec un espace de distribution (21) entouré au moins en partie par un bâti (20), dont partent un nombre total de conduites (03) dont certaines sont bloquées selon les besoins au moins au sein d'un plan de distribution (100, 101, 102) et avec un conteneur de collecte (08) disposé au-dessous de l'espace de distribution (21) sur un point de collecte (05), dans lequel les grains attribués aux conduites (03) momentanément bloquées tombent, **caractérisé par** un rotor de levage (07) s'étendant le long d'un axe de rotation (06), qui atteint l'intérieur du conteneur de collecte (08) avec son extrémité inférieure et fait saillie au-dessus du plan de distribution (100, 101, 102) avec son extrémité supérieure, avec une paroi de rotor de levage (70) disposée concentrique avec l'axe de rotation (06) et délimitant une section transversale augmentant en continu de bas en haut, dont la section transversale la plus fine se trouve en bas, à proximité du dessus du point de collecte (05) et dont la section transversale la plus large se trouve au-dessus du plan de distribution (100, 101, 102).

10. Dispositif selon la revendication 9, dans lequel la paroi de rotor de levage (70) est disposée rotative autour de l'axe de rotation (06).

11. Dispositif selon la revendication 9, dans lequel la paroi de rotor de levage (70) est disposée à demeure autour de l'axe de rotation (06) et le rotor de levage (07) comprend au moins une paroi pouvant être poussée, entraînée en continu autour de l'axe de rotation (06).

12. Dispositif selon la revendication 9, 10 ou 11, comprenant des conduites de retour (09) débouchant dans le conteneur de collecte (05) et partant des conduites bloquées (03), ainsi que des moyens de blocage (10, 11) dans les conduites (03) bloquées, partant du distributeur (02), parmi lesquels chaque moyen de blocage (10, 11) disposé dans une conduite (03) pouvant être bloquée, partant du distributeur (02), alimente au moins le produit granuleux comprenant des grains au choix vers la conduite (03) respective partant du distributeur (02) ou, en cas de blocage nécessaire, vers la conduite de retour (09) correspondante et, ainsi, vers le conteneur de collecte (08).

13. Dispositif selon une des revendications 9 à 12, dans lequel un rotor (04) disposé rotatif avec une paroi de rotor (40) disposée concentrique par rapport à un axe de rotation (06) est disposé dans l'espace de répartition (21), dans lequel débouche un courant de grains entrant dans le distributeur (02).

14. Dispositif selon la revendication 13, dans lequel le rotor de levage (07) forme une partie du rotor (04), le comprend ou est compris par celui-ci et les axes de rotation (06) du rotor (04) et du rotor de levage (07) coïncident l'un avec l'autre.

15. Dispositif selon la revendication 13 ou 14, dans lequel :
- le courant de grains forme une partie d'un courant mixte (15) avec un courant d'air servant de milieu porteur pour le courant de grains,
- le courant mixte (15) pénètre le long de l'axe de rotation (06) dans le distributeur (02),
- la paroi de rotor (40) est disposée rotative autour de l'axe de rotation (06),
- dans la paroi de rotor (40), dans au moins un premier plan de distribution - en abrégé plan de distribution d'air (200) - prévu dans la direction d'entrée du courant mixte (15), des premières ouvertures radiales sont prévues, en guise d'ouvertures de sortie d'air (41), par lesquelles les courants d'air partiels (13) quittent le rotor (04),
- dans la paroi de rotor (40), dans au moins un deuxième plan de distribution - en abrégé plan de distribution de grains (300) - prévu dans la direction d'entrée du courant mixte, des deuxièmes ouvertures radiales sont prévues, en guise d'ouvertures de sortie de grains (42), par lesquelles les courants de grains partiels (12) quittent le rotor (04) et
- les ouvertures de sortie d'air (41) sont délimitées, par des parois de séparation s'écartant radialement de l'axe de rotation (06), des parties de la paroi de rotor (40) présentant les ouvertures de distribution de grains (42).
